# FASCICULE DE BREVET EUROPEEN

(11) **EP 4 099 128 B1**
(45) Date de publication et mention de la délivrance du brevet: **06.09.2023**
(21) Numéro de dépôt: 22172696.1
(22) Date de dépôt: 11.05.2022
(51) Int. Cl.: G05D 1/06, B64D 27/02, B64D 27/24, B60L 50/00, B64D 31/00, B64C 27/00, B60L 50/16

(54) **PROCEDE D AIDE AU PILOTAGE D'UN GIRAVION EN HAUTES ALTITUDES GRACE A L'APPORT D'UNE PUISSANCE MECANIQUE PROVENANT D'UNE INSTALLATION MOTRICE ELECTRIQUE**
VERFAHREN ZUR UNTERSTÜTZUNG DER STEUERUNG EINES DREHFLÜGELFLUGZEUGS IN HOHEN HÖHEN DANK EINER MECHANISCHEN LEISTUNG, DIE AUS EINER ELEKTRISCHEN MOTORANLAGE STAMMT
METHOD FOR ASSISTED PILOTING OF A ROTORCRAFT AT HIGH ALTITUDES THROUGH DELIVERY OF MECHANICAL POWER FROM AN ELECTRIC POWER PLANT

(30) Priorité: 31.05.2021 FR 2105685
(43) Date de publication de la demande: 07.12.2022
(73) Titulaire: Airbus Helicopters, 13725 Marignane Cedex (FR)
(72) Inventeur: PICCONE, Jean-François, 13480 CABRIES (FR)
(74) Mandataire: GPI Brevets

(56) Documents cités:
- FR-A1- 3 084 318
- FR-A1- 3 092 926

## Description

La présente invention concerne un procédé d'aide au pilotage d'un giravion en hautes altitudes grâce à l'apport de puissance provenant d'une installation motrice électrique d'une installation motrice hybride ainsi qu'un giravion muni d'une installation motrice hybride et configuré pour mettre en oeuvre ce procédé.

Un giravion est classiquement pourvu d'un fuselage et d'au moins un rotor principal pour au moins participer à la sustentation, voire à la propulsion du giravion. Un giravion peut aussi comporter un rotor auxiliaire apte à s'opposer au couple induit par la rotation du rotor principal sur son fuselage.

Un giravion peut encore comporter une ou plusieurs hélices générant une poussée pour assurer au moins partiellement la propulsion du giravion, et susceptibles également de s'opposer au couple induit par la rotation du rotor principal sur le fuselage.

Par souci de simplification, le terme « rotor » désigne par la suite aussi bien un rotor principal, un rotor auxiliaire ou une hélice du giravion.

Un giravion comporte également une installation motrice munie d'une chaîne de transmission mécanique et d'au moins un moteur. La chaîne de transmission mécanique est reliée mécaniquement d'une part au ou aux moteurs et, d'autre part, au ou aux rotors du giravion. De la sorte, l'installation motrice entraîne en rotation le ou les rotors du giravion.

Une installation motrice comporte un ou plusieurs moteurs thermiques dits aussi « moteurs à combustion », tels qu'un moteur à pistons ou une turbine à gaz.

Par ailleurs, le domaine de vol d'un giravion est limité, d'une part par des limites aérodynamiques du giravion, et d'autre part par les performances de son installation motrice. Les performances des moteurs thermiques sont en particulier influencées par la pression atmosphérique et par la température de l'air extérieur. Dès lors, l'altitude maximale atteignable par le giravion est fonction notamment de la masse totale du giravion ainsi que de la pression atmosphérique et de la température de l'air extérieur.

En effet, la pression atmosphérique et la température de l'air extérieur diminuent lorsque l'altitude augmente. La baisse de la pression atmosphérique lorsque l'altitude augmente entraîne alors une baisse des performances du moteur thermique. Par suite, pour un giravion muni uniquement d'un ou plusieurs moteurs thermiques, le ou les moteurs thermiques du giravion ne permettent plus de fournir seuls au giravion une vitesse ascensionnelle positive à partir d'une certaine altitude dite « altitude maximale atteignable » et le giravion ne peut plus augmenter son altitude.

Cette altitude maximale atteignable est par exemple indiquée sur des abaques pour un giravion donné avec une installation motrice donnée, en fonction de la masse totale du giravion ainsi que de la pression atmosphérique et de la température de l'air extérieur au giravion.

De plus, les performances d'un moteur thermique varient également en fonction d'un état de vieillissement de ce moteur thermique, à savoir en fonction de la durée de son utilisation ainsi que la façon dont il a été utilisé et endommagé.

Cet état de vieillissement d'un moteur thermique d'un giravion peut être déterminé par exemple par des mesures de paramètres de ce moteur thermique lors de son fonctionnement, par exemple lors d'un vol. Les documents FR 2986506 et FR 2986507 décrivent par exemple de telles méthodes de détermination de l'état de vieillissement d'un moteur thermique qui peuvent être désignées « procédé de contrôle santé moteur ».

Cependant, afin d'être applicable durant toute la vie du moteur thermique, à savoir de l'état neuf à l'état vieilli, le domaine de vol du giravion équipé de ce moteur, et en particulier l'altitude maximale atteignable, est déterminé en fonction des performances du giravion à l'état vieilli. En conséquence, ce domaine de vol est généralement minimisé au regard des capacités réelles du giravion, mais sécurisant car valable y compris lorsque le moteur thermique atteint l'état vieilli.

Dans ce cadre, la présente invention a pour objectif d'augmenter le domaine de vol d'un giravion grâce à l'apport d'une puissance mécanique et/ou propulsive par une installation motrice électrique.

L'installation motrice d'un giravion peut en effet comporter également une ou plusieurs machines électriques pour mettre en mouvement la chaîne de transmission mécanique. Le ou les moteurs thermiques et le ou les machines électriques sont reliés mécaniquement à la chaîne de transmission mécanique. Le ou les rotors du giravion peuvent alors être entraînés en rotation, via la chaîne de transmission mécanique, indépendamment ou conjointement par le ou les moteurs thermiques et par le ou les machines électriques. Une telle installation motrice est dite « hybride » par commodité.

Une machine électrique peut être un moteur électrique, remplissant uniquement une fonction motrice.

Alternativement, une machine électrique peut être réversible, remplissant alors une fonction motrice et une fonction génératrice d'électricité. La machine électrique peut alors fonctionner soit selon un mode « moteur électrique » pour fournir une puissance mécanique à la chaîne de transmission mécanique, soit selon un mode « générateur électrique » pour générer de l'énergie électrique à partir d'une puissance mécanique prélevée sur la chaîne de transmission mécanique.

Différentes implantations d'une machine électrique sont possibles au sein d'une installation motrice hybride d'un giravion. Le document FR 3003514 décrit par exemple une machine électrique reliée à une boîte de transmission principale de puissance de la chaîne de transmission mécanique agencée entre le ou les moteurs thermiques et chaque rotor. Une machine électrique peut également être positionnée entre un moteur thermique et cette boîte de transmission principale de puissance, une machine électrique étant alors associée à chaque turbomoteur.

Selon le document FR 3039614, une machine électrique d'une installation motrice hybride peut être reliée mécaniquement à un moteur thermique ou bien à une chaîne de transmission mécanique de l'installation motrice hybride en fonction d'une puissance mécanique maximale fournie par cette machine électrique.

Le document FR 2997382 décrit une installation motrice hybride comportant au moins deux moteurs thermiques et au moins une machine électrique intervenant suite à une panne d'au moins un moteur thermique pour fournir une puissance mécanique compensant au moins partiellement la panne moteur.

Selon le document FR 2933910, une machine électrique a pour fonction de limiter la consommation de carburant du giravion.

En outre, le document FR 3084318 décrit un procédé de gestion de l'énergie d'une installation motrice hybride d'un aéronef multirotor lors d'un vol de l'aéronef de sorte qu'au moins la phase de décollage et la phase d'atterrissage soient réalisées uniquement en consommant de l'énergie électrique.

Selon le document FR 3089205, un aéronef comporte une architecture modulaire à la fois d'un point de vue mécanique pour pouvoir transmettre un couple moteur à au moins un rotor de l'aéronef et d'un point de vue électrique pour pouvoir commander alternativement ou simultanément des moteurs de différentes natures et plus précisément des moteurs thermique ou électrique.

Selon le document FR 3092926, un aéronef à décollage et atterrissage verticaux comporte une propulsion hybride muni d'un système de gestion d'énergie embarqué permettant de sélectionner le type de propulsion, à savoir électrique ou thermique, en fonction de l'énergie électrique et du carburant disponibles, du plan de vol et de certaines contraintes, telles que des contraintes de sécurité et d'environnement.

De plus, un giravion muni d'une installation motrice hybride peut comporter une architecture de réseau électrique spécifique, telle que décrite dans les documents FR 2962404 et FR 2993243 par exemple.

La présente invention a alors pour objet un procédé fournissant une aide au pilotage d'un giravion muni d'une installation motrice hybride afin que le giravion puisse atteindre des hautes altitudes, notamment au delà d'une altitude atteignable avec les seules capacités d'une installation motrice thermique du giravion.

Tout d'abord, la présente invention a pour objet un procédé tel que revendiqué d'aide au pilotage d'un giravion en hautes altitudes grâce à l'apport d'une puissance mécanique provenant d'une installation motrice électrique du giravion, le giravion comportant :
- au moins un rotor,
- une installation motrice hybride munie d'une installation motrice électrique et d'une installation motrice thermique qui sont reliées audit au moins un rotor par une chaîne de transmission mécanique, l'installation motrice thermique comprenant au moins un moteur thermique, au moins un calculateur moteur dudit au moins un moteur thermique et au moins un réservoir contenant du carburant alimentant ledit au moins un moteur thermique, l'installation motrice électrique comprenant au moins une machine électrique ainsi qu'au moins un dispositif de contrôle de ladite au moins une machine électrique et au moins un dispositif de stockage d'énergie électrique alimentant ladite au moins une machine électrique en énergie électrique,
- un dispositif de visualisation, et
- un calculateur.

Ce procédé est remarquable en ce qu'il comporte les étapes suivantes :
- définition d'un point de décollage du giravion et de son altitude initiale,
- définition d'un point objectif pour le giravion et de son altitude finale,
- détermination d'une première altitude maximale atteignable par le giravion à l'aide uniquement de l'installation motrice thermique, par le calculateur selon une première loi d'altitude, en fonction d'une masse totale initiale du giravion avant décollage, d'une quantité initiale de carburant embarqué contenu dans ledit au moins un réservoir avant le décollage du giravion, d'une pression atmosphérique et d'une température de l'air, et d'un état de vieillissement dudit au moins un moteur thermique,

- estimation d'une seconde altitude maximale atteignable par le giravion à l'aide de l'installation motrice thermique et de l'installation motrice électrique, par le calculateur selon une seconde loi d'altitude, en fonction de la première altitude maximale, d'une masse totale prédite du giravion au point objectif et d'une quantité prédite d'énergie électrique intermédiaire disponible dans ledit au moins un dispositif de stockage d'énergie électrique à la première altitude maximale,
- affichage d'une information relative à une comparaison entre l'altitude finale et la seconde altitude maximale sur le dispositif de visualisation du giravion.

Ce procédé permet de la sorte d'augmenter avantageusement le domaine de vol du giravion, et en particulier l'altitude maximale atteignable, par l'utilisation complémentaire d'une installation motrice électrique. Ce procédé peut faciliter les vols dans une région montagneuse, par exemple pour le secours aux personnes et pour le transport de matériel.

La première loi d'altitude peut prendre en compte les caractéristiques de l'installation motrice thermique, et notamment la consommation en carburant du ou des moteurs thermiques et la puissance mécanique que peut fournir l'installation motrice thermique.

La seconde loi d'altitude peut prendre en compte les caractéristiques de l'installation motrice électrique, et notamment la consommation en énergie électrique de la ou des machines électriques et la puissance mécanique que peut fournir l'installation motrice électrique.

Chaque loi d'altitude peut être établie par essais, calculs et/ou simulations. Le terme « loi » désigne tout moyen permettant d'effectuer les calculs concernés, tel que des tableaux de valeurs, des équations, des abaques, mémorisés par exemple dans une mémoire du calculateur ou dans une mémoire reliée au calculateur.

Le procédé permet alors l'affichage d'une information relative à une comparaison entre l'altitude finale et la seconde altitude maximale sur le dispositif de visualisation du giravion. Par exemple, si la seconde altitude maximale est supérieure ou égale à l'altitude finale du point objectif, le giravion peut atteindre le point objectif. Une information confirmant la possibilité d'atteindre le point objectif par le giravion et de réaliser la mission peut donc être affichée pour assister le pilote. Cette information peut prendre la forme de l'allumage d'un voyant, par exemple vert, l'affichage d'un message signalant que le point objectif peut être atteint ou encore l'affichage de la différence entre l'altitude finale et la seconde altitude maximale sur le dispositif de visualisation.

A contrario, si la seconde altitude maximale est inférieure à l'altitude finale, le point objectif ne peut pas être atteint par le giravion et la réalisation de la mission est impossible. Une information peut donc être affichée pour le signaler au pilote du giravion. Cette information peut prendre la forme de l'allumage d'un voyant, par exemple rouge, l'affichage d'un message signalant que le point objectif ne peut pas être atteint ou encore l'affichage de la différence entre l'altitude finale et la seconde altitude maximale sur le dispositif de visualisation.

Le procédé peut aussi comporter une génération d'une alerte lorsque l'altitude finale est supérieure à la seconde altitude maximale.

Le procédé selon l'invention peut comprendre une ou plusieurs des caractéristiques qui suivent, prises seules ou en combinaison.

Par exemple, la définition du point de décollage du giravion et de son altitude initiale peut comporter les sous-étapes suivantes :
- définition d'une position initiale du point de décollage du giravion, et
- détermination de l'altitude initiale du point de décollage, à partir de la position initiale du point de décollage et d'une base de données terrain ou d'une cartographie en trois dimensions.

La position initiale du point de décollage du giravion peut être fournie par un récepteur d'un système de localisation par satellites transmettant vers le calculateur un signal porteur d'une information relative à une position courante du giravion, par exemple sous la forme de coordonnées dans un repère terrestre, telles une latitude et une longitude.

La position initiale du point de décollage du giravion peut aussi être saisie par le pilote ou un membre de l'équipage du giravion à l'aide d'une interface reliée au calculateur. Une telle interface désigne par exemple un clavier ou un écran muni d'une dalle tactile. Cette position initiale peut être saisie sous la forme de coordonnées dans le repère terrestre ou en pointant le point de décollage sur une carte affichée sur un écran.

Ensuite, le calculateur peut déterminer l'altitude initiale du point de décollage en le positionnant sur une cartographie en trois dimensions ou par rapport à une base de données terrain stockées dans une mémoire du calculateur ou dans une mémoire reliée au calculateur.

De même, la définition du point objectif pour le giravion et de son altitude finale peut comporter les sous-étapes suivantes :
- définition d'une position finale du point objectif, et
- détermination de l'altitude finale du point objectif, à partir de la position du point objectif et de la base de données terrain ou de la cartographie en trois dimensions.

La position finale du point objectif peut être saisie par le pilote ou un membre de l'équipage du giravion à l'aide de l'interface. Cette position finale peut être saisie sous la forme de coordonnées dans le repère terrestre ou en pointant le point objectif sur une carte affichée sur un écran.

Ensuite, le calculateur peut déterminer l'altitude finale du point objectif en le positionnant sur une cartographie en trois dimensions ou par rapport à une base de données terrain stockées dans une mémoire du calculateur ou dans une mémoire reliée au calculateur.

Selon un autre exemple, le procédé peut comporter une détermination d'une distance de vol entre le point de décollage et le point objectif à l'aide dudit calculateur.

La distance de vol peut être calculée selon une trajectoire de vol rectiligne entre le point de décollage et le point objectif, à savoir selon la distance la plus courte entre le point de décollage et le point objectif.

La distance de vol peut être calculée selon une trajectoire de vol non rectiligne entre le point de décollage et le point objectif, cette trajectoire de vol non rectiligne pouvant être déterminée par le calculateur en prenant en compte le relief et/ou les conditions météorologiques, en évitant le survol de zones particulières, comportant par exemple un village ou encore une zone à risque d'avalanche mémorisée. Cette trajectoire de vol curviligne peut être déterminée par le calculateur à l'aide d'une cartographie en trois dimensions et/ou d'une base de données terrain stockées dans une mémoire du calculateur ou dans une mémoire reliée au calculateur. Cette trajectoire de vol curviligne peut aussi être déterminée par le calculateur à l'aide de prévisions météorologiques de la zone entre le point de décollage et le point objectif, ces prévisions météorologiques ayant été préalablement stockées dans une mémoire du calculateur ou une mémoire reliée au calculateur.

Cette trajectoire de vol curviligne permet par exemple de contourner une zone orageuse ou de fortes turbulences, éventuellement en restant proche du sol ou des reliefs. Cette trajectoire de vol curviligne évite aussi les massifs montagneux ou permet de suivre une vallée par exemple.

Selon un autre exemple, le procédé peut comporter une vérification de la faisabilité de la mission en fonction de la distance de vol, de la masse totale initiale du giravion avant décollage, de la quantité initiale de carburant embarqué contenu dans ledit au moins un réservoir avant le décollage et d'une loi de consommation de carburant du giravion. Cette vérification de la faisabilité de la mission permet de vérifier que la quantité initiale de carburant est suffisante pour permettre au giravion d'atteindre le point objectif et de revenir au point de décollage.

La masse totale initiale du giravion peut être déterminée à l'aide d'un dispositif de détermination de masse dédié, mesurant par exemple une charge subie par une roue d'un train d'atterrissage du giravion, comme décrit dans les documents FR 2986322 et FR 3068004 par exemple. Le dispositif de détermination de masse transmet alors un signal porteur de cette information de la masse totale initiale du giravion au calculateur.

La masse totale initiale du giravion peut aussi être déterminée par une saisie par un opérateur, via l'interface, des masses des différents éléments embarqués dans le giravion, à savoir la masse de la ou des charges utiles, la masse de l'équipage et la masse initiale du carburant embarqué se trouvant dans ledit au moins un réservoir. La masse initiale de carburant embarqué peut aussi être déterminée à l'aide d'une mesure de la quantité initiale de carburant se trouvant dans ledit au moins un réservoir à l'aide d'un instrument, telle une jauge, et transmettant vers le calculateur d'un signal porteur d'une valeur relative à la masse ou au volume dudit carburant embarqué.

Si la vérification de la faisabilité de la mission conclut que la quantité initiale de carburant embarqué est insuffisante, le procédé comporte une génération d'une alerte l'indiquant au pilote ou à l'équipage du giravion.

Cette vérification de la faisabilité de la mission peut aussi prendre en compte la masse de la charge utile ou bien de la ou des personnes à embarquer dans le giravion et/ou à débarquer du giravion au point objectif. Cette masse de la charge utile ou bien de la ou des personnes à embarquer et/ou à débarquer peut avoir été préalablement stockée dans une mémoire du calculateur ou reliée au calculateur, suite à une saisie par le pilote ou un membre de l'équipage du giravion, à l'aide de l'interface, ou à une réception d'un signal porteur d'une information relative à cette masse et transmis au calculateur.

Par ailleurs, pour déterminer la première altitude maximale, le procédé utilise la pression atmosphérique et la température de l'air, cette pression atmosphérique et la température de l'air étant prévues ou estimées au point objectif.

Dans ce but, une pression atmosphérique prédite et une température prédite de l'air au point objectif peuvent avoir été préalablement stockées dans une mémoire du calculateur ou dans une mémoire reliée au calculateur, suite à une saisie par le pilote ou un membre de l'équipage du giravion, à l'aide d'un clavier ou d'un écran muni d'une dalle tactile, des valeurs de la pression atmosphérique prédite et de la température prédite ou à une réception d'un signal porteur d'informations de prévision relatives à cette pression atmosphérique prédite et à cette température prédite via le dispositif de réception du giravion et transmis au calculateur.

Le procédé peut aussi comporter une détermination de la pression atmosphérique prédite et de la température prédite de l'air au point objectif comprenant les sous-étapes suivantes :
- détermination d'une pression atmosphérique initiale et d'une température initiale au point de décollage, et
- calcul de la pression atmosphérique prédite et de la température prédite en fonction de la pression atmosphérique initiale, de la température initiale, de l'altitude initiale et de l'altitude finale par le calculateur.

La détermination de la pression atmosphérique initiale et de la température initiale peut être effectuée par une saisie par le pilote ou par un membre de l'équipage du giravion, à l'aide de l'interface, des valeurs de la pression atmosphérique initiale et de la température initiale ou à une réception d'un signal porteur d'informations de prévision relatives à cette pression atmosphérique initiale et à cette température initiale via le dispositif de réception du giravion et transmis au calculateur.

La détermination de la pression atmosphérique initiale et de la température initiale peut aussi être effectuée par une mesure de la pression atmosphérique initiale et de la température initiale par un ou deux appareils de mesure dédiés, par exemple un baromètre et un thermomètre embarqués dans le giravion ou tout autre dispositif d'anémobarométrie. Ce ou ces deux appareils de mesure transmettent alors un ou deux signaux porteurs des valeurs de la pression atmosphérique initiale et de la température initiale au niveau du giravion, et donc du point de décollage.

Ensuite, le calculateur peut calculer la pression atmosphérique prédite et la température prédite par application de formules connues en fonction de l'altitude initiale, de l'altitude finale, de la pression atmosphérique initiale et de la température initiale. La pression atmosphérique prédite et la température prédite de l'air peuvent ainsi être prises en compte pour la détermination de la première altitude maximale.

En outre, pour déterminer la première altitude maximale, le procédé utilise la masse totale initiale du giravion avant décollage comme donnée d'entrée de la première loi d'altitude.

Pour déterminer la seconde altitude maximale, le procédé utilise la masse totale prédite du giravion au point objectif comme donnée d'entrée de la seconde loi d'altitude.

Dans ce but, une valeur de la masse totale prédite peut avoir été préalablement stockée dans une mémoire du calculateur ou dans une mémoire reliée au calculateur. Cette valeur estimative peut avoir été saisie par le pilote ou un membre de l'équipage du giravion, à l'aide de l'interface.

La masse totale prédite du giravion au point objectif peut également être une valeur de sortie de la première loi d'altitude, en fonction notamment de la masse initiale du giravion avant décollage.

Le procédé peut aussi comporter une estimation de la masse totale prédite du giravion au point objectif à l'aide du calculateur en fonction d'une masse totale initiale du giravion avant décollage et de la distance de vol entre le point de décollage et le point objectif, l'estimation d'une masse totale prédite comportant les sous-étapes suivantes :
- détermination de la masse totale initiale du giravion au décollage,
- estimation d'une masse prédite de carburant consommé entre le point de décollage et le point objectif en fonction de la masse totale initiale, de la distance de vol entre le point de décollage et le point objectif, et des conditions météorologiques, et
- estimation de la masse totale prédite du giravion au point objectif par soustraction de la masse prédite de carburant consommé à la masse totale initiale.

La masse prédite de carburant consommé entre le point de décollage et le point objectif peut alors être calculée par le calculateur selon la loi de consommation de carburant, en fonction notamment de la masse totale initiale, de la distance de vol et des conditions météorologiques, à savoir la pression atmosphérique et la température de l'air entre le point de décollage et le point objectif.

Une marge d'incertitude peut être ajoutée à la masse de carburant consommé. Cette marge d'incertitude peut permettre de compenser une estimation de cette masse de carburant consommé effectuée par un calcul théorique par rapport à un calcul basé sur des relevés ou mesures. Cette marge d'incertitude peut aussi permettre d'anticiper un éventuellement de changement de trajectoire du giravion en cours de vol ou une augmentation de la masse de la charge utile à embarquer au point objectif par exemple. Une telle marge d'incertitude peut être comprise entre 5 et 20% de la masse de carburant consommé.

Par ailleurs, pour déterminer la première altitude maximale, le calculateur utilise un état de vieillissement dudit au moins un moteur thermique. L'état de vieillissement courant d'un moteur thermique permet de définir le niveau courant de performances du giravion, qui est compris entre un niveau de performances à l'état neuf et un niveau de performances à un état vieilli, correspondant à l'état de vieillissement maximum autorisé de ce moteur thermique.

Selon une première variante, le procédé peut considérer que l'état de vieillissement dudit au moins un moteur thermique utilisé par le procédé lors de la détermination de la première altitude maximale est égal à l'état de vieillissement maximum autorisé de ce moteur thermique et utiliser cet état de vieillissement maximum autorisé lors de la détermination de la première altitude maximale. L'écart entre l'état de vieillissement courant et l'état de vieillissement maximum peut être pénalisant en termes d'étendue du domaine de vol, mais peut également permettre de prendre en compte, de façon automatique, une marge de sécurité dans le calcul de la première altitude maximale.

Selon une deuxième variante, le procédé peut considérer que l'état de vieillissement dudit au moins un moteur thermique est égal au dernier état de vieillissement déterminé précédemment pour le giravion. En effet, une détermination d'un état de vieillissement dudit au moins un moteur thermique est effectuée lors de certains vols du giravion, voire de la plupart des vols quand cela est possible, en appliquant par exemple une procédure spécifique permettant la mesure de paramètres du moteur thermique et d'en déduire son état de vieillissement.

Selon une troisième variante, le procédé peut comporter une estimation d'un état de vieillissement dudit au moins un moteur thermique au point objectif en fonction des derniers états de vieillissements déterminés précédemment afin de déterminer l'état de vieillissement utilisé par le procédé lors de la détermination de la première altitude maximale.

En effet, en connaissant les derniers états de vieillissements déterminés précédemment ainsi que leurs dates de détermination, il est possible d'estimer par interpolation et par anticipation l'état de vieillissement courant dudit au moins un moteur thermique du giravion. Une telle interpolation est en particulier fiable lorsque le giravion effectue fréquemment les mêmes profils de mission. De même, en estimant la durée de vol jusqu'au point objectif en fonction de la distance de vol, il est possible d'estimer par interpolation et par anticipation l'état de vieillissement dudit au moins un moteur thermique une fois le giravion arrivé au point objectif en fonction de ces derniers états de vieillissements ainsi que de leurs dates de détermination.

Selon une quatrième variante, le procédé peut comporter une détermination d'un état de vieillissement dudit au moins un moteur thermique. Cette détermination d'un état de vieillissement dudit au moins un moteur thermique peut notamment être effectuée lors du vol du giravion vers le point objectif, afin de prendre en compte l'état de vieillissement courant du giravion pour déterminer la première altitude maximale.

Par ailleurs, pour déterminer la seconde altitude maximale, le calculateur utilise une quantité prédite d'énergie électrique intermédiaire disponible dans ledit au moins un dispositif de stockage d'énergie électrique à la première altitude maximale.

Dans ce but, le procédé peut comporter une détermination de la quantité prédite d'énergie électrique intermédiaire comportant les sous-étapes suivantes :
- détermination d'une quantité initiale d'énergie électrique disponible dans ledit au moins un dispositif de stockage d'énergie électrique au décollage, ledit au moins un dispositif de stockage d'énergie électrique comportant un calculateur moteur transmettant un signal porteur d'une information relative à la quantité initiale d'énergie électrique vers le calculateur,
- estimation d'une quantité prédite d'énergie électrique consommée entre le point de décollage et un point situé à la première altitude maximale, entre le point de décollage et le point objectif,
- estimation de la quantité prédite d'énergie électrique intermédiaire par soustraction de la quantité prédite d'énergie électrique consommée à la quantité initiale d'énergie électrique.

Ledit au moins un dispositif de stockage d'énergie électrique peut comporter un dispositif de gestion pouvant déterminer à tout moment la quantité d'énergie contenue dans le ou les dispositifs de stockage d'énergie électrique, cette quantité d'énergie étant disponible pour alimenter ladite au moins une machine électrique.

Ainsi, avant le décollage du giravion, le dispositif de gestion peut transmettre au calculateur un signal porteur d'une information relative à cette quantité d'énergie initiale.

Le calculateur peut ensuite, en fonction de la distance de vol et d'une loi de consommation électrique du giravion en vol, estimer la quantité prédite d'énergie électrique consommée par le giravion lorsqu'il atteindra la première altitude maximale. La loi de consommation électrique peut avoir été déterminée par calcul ou suite à des vols précédents du giravion, ou de giravions semblables par exemple. La loi de consommation électrique est par exemple déterminée à partir de la consommation électrique moyenne du giravion en vol.

Le calculateur peut soustraire la quantité prédite d'énergie électrique consommée à la quantité initiale d'énergie électrique pour estimer la quantité prédite d'énergie électrique intermédiaire.

La détermination d'une quantité prédite d'énergie électrique intermédiaire peut aussi comporter, une estimation d'une quantité prédite d'énergie électrique susceptible d'être générée pendant le vol du giravion jusqu'à la première altitude maximale et stockée dans ledit au moins un dispositif de stockage d'énergie électrique si cela est possible, à savoir si la capacité maximale de stockage d'énergie électrique n'est pas atteinte. Le calculateur peut par exemple déterminer la quantité prédite d'énergie électrique susceptible d'être générée pendant le vol en fonction de la distance de vol selon une loi de production électrique du giravion en vol. La loi de production électrique peut avoir été déterminée par calcul ou suite à des vols précédents du giravion, ou de giravions semblables par exemple. La loi de production électrique est par exemple déterminée à partir de la production électrique moyenne du giravion en vol.

Le calculateur peut ensuite ajouter la quantité prédite d'énergie électrique susceptible d'être générée pendant le vol à l'estimation de la quantité prédite d'énergie électrique intermédiaire précédemment calculée.

Par ailleurs, la quantité prédite d'énergie électrique intermédiaire peut être considérée égale à la quantité initiale d'énergie électrique, si le dispositif de stockage d'énergie électrique de l'installation motrice hybride n'est pas utilisé pour alimenter électriquement un réseau de bord du giravion.

De plus, le calculateur peut prendre en compte une réserve d'énergie que doit comporter le dispositif de stockage d'énergie électrique une fois le point objectif atteint. Cette réserve d'énergie permet d'assurer un vol retour en sécurité, par exemple pour l'alimentation électrique des équipements électriques du giravion et éventuellement en cas d'une panne d'un moteur thermique.

De plus, l'estimation de la seconde altitude maximale peut comporter les sous-étapes suivantes :
- calcul d'un supplément d'altitude atteignable par le giravion à l'aide de l'installation motrice électrique à partir de la première altitude maximale selon la seconde loi d'altitude en fonction de la masse totale prédite du giravion, de la quantité initiale d'énergie électrique disponible dans ledit au moins un dispositif de stockage d'énergie électrique, et
- calcul de la seconde altitude maximale par addition de la première altitude maximale et du supplément d'altitude.

La seconde loi d'altitude définit dans ce cas un supplément d'altitude atteignable grâce à la puissance mécanique fournie par l'installation motrice électrique au moins au-delà de la première altitude maximale. Ce supplément d'altitude est avantageusement indépendant de la première altitude maximale.

En outre, le procédé peut comporter un paramétrage d'une configuration aérodynamique du giravion, les déterminations de la première altitude maximale et de la seconde altitude maximale prenant en compte cette configuration aérodynamique.

En effet, la configuration aérodynamique a un effet direct sur les performances du giravion, et de fait sur la première altitude maximale ainsi que sur la seconde altitude maximale et le cas échéant sur le supplément d'altitude. Les performances sont notamment dégradées par la présence d'appendices ou d'équipements optionnels générant par exemple une traînée aérodynamique supplémentaire. De tels équipements comprennent par exemple un treuil ou une civière posée sur un patin du train d'atterrissage à patins du giravion.

Un système visant à protéger la ou les entrées d'air de l'installation motrice thermique peut aussi être pris en compte dans la configuration aérodynamique du giravion. Un tel système peut par exemple comporter une simple grille agencée devant une entrée d'air, un dispositif dit « à vortex » agencé dans une entrée d'air ou encore un dispositif désigné par l'acronyme *IBF* pour la désignation en langue anglaise « Inlet Barrier Filter » agencé au niveau d'une entrée d'air. Un tel système peut générer des pertes de charges plus ou moins importantes pouvant influer directement sur les capacités opérationnelles d'un moteur thermique, et donc en diminuer les performances.

Par ailleurs, si l'altitude finale du point objectif est supérieure à la seconde altitude maximale, le procédé peut comporter une estimation d'une masse totale « objectif » du giravion, cette masse totale « objectif » du giravion étant une masse totale du giravion avant décollage permettant que la seconde altitude maximale soit supérieure ou égale à l'altitude finale. Lors de l'affichage, une information relative à cette masse totale « objectif » est affichée sur le dispositif de visualisation. Cette information affichée peut être la valeur de la masse totale « objectif » ou bien la différence entre la masse totale initiale et la masse totale « objectif », à savoir la masse à retirer du giravion avant le décollage pour permettre d'atteindre le point objectif.

Cette estimation d'une masse totale « objectif » du giravion peut être obtenue par exemple par itération en calculant successivement des secondes altitudes maximales en réduisant la masse totale initiale du giravion jusqu'à obtenir une seconde altitude maximale au moins supérieure à l'altitude finale.

De même, si l'altitude finale du point objectif est supérieure à la seconde altitude maximale, le procédé peut comporter une estimation d'une quantité supplémentaire de carburant à ajouter audit au moins un réservoir pour que la seconde altitude maximale soit supérieure ou égale à l'altitude finale. Lors de l'affichage, une information relative à cette quantité supplémentaire de carburant à ajouter est affichée sur le dispositif de visualisation. Le calculateur peut prendre en compte la capacité dudit au moins un réservoir et afficher cette information si elle est compatible avec cette capacité et la quantité initiale de carburant.

Si l'altitude finale du point objectif est supérieure à la seconde altitude maximale, le procédé peut encore comporter une estimation d'une quantité supplémentaire d'énergie électrique à ajouter afin que la seconde altitude maximale soit supérieure ou égale à l'altitude finale. Lors de l'affichage, une information relative à cette quantité supplémentaire d'énergie électrique à ajouter est affichée sur le dispositif de visualisation.

Comme pour l'estimation de la masse totale « objectif » du giravion, les estimations de la quantité supplémentaire de carburant à ajouter et de la quantité supplémentaire d'énergie électrique peuvent être obtenues par itération.

Le calculateur peut prendre en compte la capacité dudit au moins un dispositif de stockage d'énergie électrique et la quantité initiale d'énergie électrique contenue dans ledit au moins un dispositif de stockage d'énergie électrique afin de préconiser de charger ledit au moins un dispositif de stockage d'énergie électrique avant le décollage du giravion ou bien de remplacer au moins un dispositif de stockage d'énergie électrique par un autre dispositif de stockage d'énergie électrique avec une plus grande capacité et/ou contenant suffisamment d'énergie électrique. Le calculateur peut alors afficher un message dans ce sens sur le dispositif de visualisation.

Le calculateur peut également préconiser, si la quantité initiale de carburant embarqué est supérieure à la quantité nécessaire pour atteindre le point objectif de charger pendant le vol, à l'aide d'un générateur d'énergie électrique de l'installation motrice électrique ou de ladite au moins une machine électrique lorsqu'elle est réversible, ledit au moins un dispositif de stockage d'énergie électrique grâce à l'installation motrice thermique.

Pour pouvoir être en mesure de réaliser sa mission, le pilote du giravion peut donc choisir, en fonction de ladite mission et de son degré d'urgence, d'alléger le giravion, de charger le dispositif de stockage d'énergie électrique et/ou d'ajouter une quantité supplémentaire de carburant.

En outre, le procédé peut comporter une détermination d'une altitude d'enclenchement de ladite au moins une machine électrique en fonction de la première altitude maximale, de l'altitude finale, de la quantité prédite d'énergie électrique intermédiaire et d'une marge d'enclenchement, ladite au moins une machine électrique entraînant ledit au moins un rotor à partir de cette altitude d'enclenchement. De fait, à partir de cette altitude d'enclenchement, l'installation motrice thermique et l'installation motrice électrique entraînent conjointement en rotation ledit au moins un rotor. Ladite au moins une machine électrique peut être démarrée à l'altitude d'enclenchement ou bien à une altitude inférieure à cette altitude d'enclenchement, sans pour autant fournir de puissance à la chaîne de transmission mécanique tant que l'altitude du giravion n'est pas égale ou supérieure à l'altitude d'enclenchement. Le démarrage de ladite au moins une machine électrique à une altitude inférieure à cette altitude d'enclenchement permet à ladite au moins une machine électrique d'être très réactive pour entraîner quasi instantanément ledit au moins un rotor dès que le giravion est à l'altitude d'enclenchement.

La marge d'enclenchement est par exemple fonction d'un mode de vol choisi et/ou de la quantité prédite d'énergie électrique intermédiaire.

Le procédé peut aussi comporter une détermination d'une altitude de préenclenchement de ladite au moins une machine électrique en fonction de la première altitude maximale, de l'altitude finale, de la quantité prédite d'énergie électrique intermédiaire et d'une marge de préenclenchement, l'altitude de préenclenchement étant inférieure à l'altitude d'enclenchement. A cette altitude de préenclenchement, ladite au moins une machine électrique est démarrée, sans participer à l'entraînement en rotation dudit au moins un rotor.

Ladite au moins une machine électrique est par exemple reliée à la chaîne de transmission mécanique par une roue libre et tourne à une vitesse légèrement inférieure à la vitesse de rotation de la chaîne de transmission mécanique entre l'altitude de préenclenchement et l'altitude d'enclenchement, ladite au moins une machine électrique ne fournissant ainsi aucune puissance mécanique à la chaîne de transmission mécanique, et par suite audit au moins un rotor.

A l'altitude d'enclenchement, la vitesse de rotation de ladite au moins une machine électrique augmente pour atteindre la vitesse de rotation de la chaîne de transmission mécanique afin que ladite au moins une machine électrique fournisse une puissance mécanique à la chaîne de transmission mécanique, et par suite audit au moins un rotor, par l'intermédiaire de la roue libre.

La marge de préenclenchement est par exemple fonction d'un mode de vol choisi et/ou de la quantité prédite d'énergie électrique intermédiaire.

Le mode de vol peut être un mode dit « classique », préservant l'énergie électrique du dispositif de stockage pour atteindre l'altitude finale et revenir au point de départ. L'altitude d'enclenchement et le cas échéant l'altitude de préenclenchement sont proches de la première altitude maximale de sorte à ne pas consommer d'énergie électrique pour alimenter ladite au moins une machine électrique avant que le giravion atteigne l'altitude d'enclenchement ou le cas échéant l'altitude de préenclenchement. L'altitude d'enclenchement peut par exemple être égale à 95% de la première altitude maximale et le cas échéant l'altitude de préenclenchement peut par exemple être égale à 90% de la première altitude maximale.

Le mode de vol peut être un mode dit « d'urgence », contribuant à atteindre le point objectif le plus rapidement possible et également revenir le plus rapidement possible au point de départ. Dans ce but, l'altitude d'enclenchement et le cas échéant l'altitude de préenclenchement sont les plus proches possibles de l'altitude initiale, en fonction de la quantité prédite d'énergie électrique intermédiaire afin que l'installation motrice thermique et l'installation motrice électrique entraînent conjointement en rotation ledit au moins un rotor le plus tôt possible au cours du vol. L'altitude d'enclenchement et le cas échéant l'altitude de préenclenchement peuvent par exemple être égales à l'altitude initiale si la quantité prédite d'énergie électrique intermédiaire est suffisante. Dans ce cas, le vol du giravion est effectué depuis le point de décollage et jusqu'au point objectif avec un démarrage de ladite au moins une machine électrique dès le décollage du giravion, ledit au moins un rotor étant entraîné en rotation conjointement par l'installation motrice thermique et par l'installation motrice électrique.

Le mode de vol peut être un mode dit « sécuritaire », préservant la sécurité du vol du giravion. Dans ce but, l'altitude de préenclenchement est égale à l'altitude initiale de sorte que ladite au moins une machine électrique soit démarrée dès le décollage du giravion. Ainsi, ladite au moins une machine électrique est prête en cas de panne d'un moteur thermique à participer à l'entraînement en rotation dudit au moins un rotor afin de limiter voire de supprimer la perte de puissance due à la panne de ce moteur thermique, ou afin de faciliter l'entrée dans un mode d'autorotation. L'altitude d'enclenchement est quant à elle proche de la première altitude maximale de sorte à ne pas consommer d'énergie électrique pour alimenter ladite au moins une machine électrique avant que le giravion atteigne l'altitude d'enclenchement si aucune panne n'est intervenue.

Le mode de vol peut être un mode dit « économique », préservant la consommation de carburant du giravion pour atteindre l'altitude finale et revenir au point de départ. L'altitude d'enclenchement et le cas échéant l'altitude de préenclenchement sont déterminées de sorte à minimiser la consommation de carburant durant le vol. L'altitude d'enclenchement et le cas échéant l'altitude de préenclenchement sont notamment déterminées en fonction de la quantité d'énergie électrique disponible dans le dispositif de stockage de sorte que la majorité de l'énergie électrique soit consommée durant l'intégralité du vol.

Bien entendu, quel que soit le mode de de vol, l'altitude d'enclenchement est déterminée afin que l'énergie électrique disponible à la première altitude maximale soit suffisante pour permettre au giravion d'atteindre l'altitude finale et de revenir au point de départ.

Le procédé selon l'invention peut aussi comporter une réalisation d'un vol du giravion jusqu'au point objectif, tel que revendiqué. Cette réalisation d'un vol du giravion comporte un enclenchement de ladite au moins une machine électrique à une altitude d'enclenchement, ladite au moins une machine électrique entraînant ledit au moins un rotor à partir de l'altitude d'enclenchement. De la sorte, ladite au moins une machine électrique et ledit au moins un moteur thermique entraînent conjointement ledit au moins un rotor à partir de ladite altitude d'enclenchement.

De plus, la réalisation du vol peut comporter les sous-étapes suivantes :
- mise à jour de la première altitude maximale atteignable par le giravion,
- mise à jour de la quantité prédite d'énergie électrique intermédiaire,
- mise à jour de la seconde altitude maximale atteignable par le giravion
- mise à jour de l'altitude d'enclenchement de ladite au moins une machine électrique.

En effet, les conditions de vol peuvent être différentes des prévisions. Par exemple, le giravion peut rencontrer un vent de face plus fort que prévu ou au contraire un vent arrière, modifiant ainsi sa consommation de carburant entre le point de décollage et le point objectif et, par suite, les valeurs de la première altitude maximale et de la seconde altitude maximale.

Le giravion peut aussi réaliser le vol selon une trajectoire différente de celle envisagée, modifiant de fait la distance de vol et, par suite sa consommation de carburant entre le point de décollage et le point objectif. Un tel changement de trajectoire peut être effectué suite par exemple à une réception de nouvelles conditions météorologiques ou d'une information d'une zone à éviter.

La réalisation du vol peut aussi comporter une détermination de l'état de vieillissement dudit moins un moteur thermique pendant le vol entre le point de décollage et le point objectif, notamment lorsque la distance de vol entre le point de décollage et le point objectif est suffisamment importante pour pouvoir prendre en compte l'état de vieillissement courant du giravion généré par ce temps de vol. La mise à jour de la première altitude maximale atteignable par le giravion peut alors corriger et prendre en compte cet état de vieillissement réel du moteur qui aura été déterminé en vol.

La réalisation du vol du giravion peut encore comporter une mesure d'une vitesse ascensionnelle du giravion par un dispositif de mesure dédié, par exemple un variomètre embarqué dans le giravion, et le calcul d'un paramètre de surveillance en fonction de cette vitesse ascensionnelle du giravion.

Le paramètre de surveillance est par exemple égal à une dérivée première de la vitesse ascensionnelle du giravion. Le paramètre de surveillance peut éventuellement être fonction de la dérivée première de la vitesse ascensionnelle du giravion, de la dérivée seconde de la vitesse ascensionnelle et/ou de la vitesse ascensionnelle elle-même.

L'enclenchement de ladite au moins une machine électrique peut alors être réalisée lorsque ce paramètre de surveillance est inférieur à un taux ascensionnel d'enclenchement prédéterminé et lorsqu'une condition complémentaire d'enclenchement est validée.

La condition complémentaire d'enclenchement peut être validée par exemple lorsqu'aucune action d'annulation de l'enclenchement n'a été effectuée par un pilote du giravion ou un autre membre d'équipage pendant une première durée prédéterminée au cours de laquelle le paramètre de surveillance reste inférieur au taux ascensionnel d'enclenchement. La réalisation du vol comporte alors un affichage d'une information que le paramètre de surveillance est inférieur au taux ascensionnel d'enclenchement. La condition complémentaire d'enclenchement peut aussi être validée si une action de validation de l'enclenchement est effectuée par le pilote du giravion avant la fin de cette première durée prédéterminée. La première durée prédéterminée est par exemple égale à 5 secondes.

La condition complémentaire d'enclenchement peut également être validée lorsqu'une action de validation de l'enclenchement est effectuée par le pilote du giravion après que le paramètre de surveillance ait été inférieur au taux ascensionnel d'enclenchement, la réalisation du vol comportant un affichage d'une information que le paramètre de surveillance est inférieur au taux ascensionnel d'enclenchement. Aucune durée n'est alors prise en compte et l'enclenchement n'est pas effectué sans action du pilote.

La condition complémentaire d'enclenchement peut aussi être validée lorsque le giravion est situé à une altitude supérieure à une altitude de validation de l'enclenchement, cette altitude de validation de l'enclenchement étant égale à la première altitude maximale multipliée par un coefficient d'enclenchement inférieur à 1. Le coefficient d'enclenchement est par exemple égal à 0,90.

La réalisation du vol du giravion peut également comporter un préenclenchement de ladite au moins une machine électrique par exemple à une altitude de préenclenchement.

Le préenclenchement de ladite au moins une machine électrique peut aussi être réalisé lorsque le paramètre de surveillance est inférieur à un taux ascensionnel de préenclenchement prédéterminé et lorsqu'une condition complémentaire de préenclenchement est validée.

La condition complémentaire de préenclenchement peut être validée par exemple lorsqu'aucune action d'annulation du préenclenchement n'a été effectuée par un pilote du giravion ou un autre membre d'équipage pendant une deuxième durée prédéterminée au cours de laquelle le paramètre de surveillance reste inférieur au taux ascensionnel de préenclenchement. Le procédé comporte alors un affichage d'une information que le paramètre de surveillance est inférieur au taux ascensionnel de préenclenchement. La condition complémentaire de préenclenchement peut aussi être validée si une action de validation du préenclenchement est effectuée par le pilote du giravion avant la fin de cette deuxième durée prédéterminée. La deuxième durée prédéterminée est par exemple égale à 5 secondes.

La condition complémentaire de préenclenchement peut également être validée lorsqu'une action de validation du préenclenchement est effectuée par le pilote du giravion après que le paramètre de surveillance ait été inférieur au taux ascensionnel de préenclenchement, le procédé comportant un affichage d'une information que le paramètre de surveillance est inférieur au taux ascensionnel de préenclenchement. Aucune durée n'est alors prise en compte et le préenclenchement n'est pas effectué sans action du pilote.

La condition complémentaire de préenclenchement peut aussi être validée lorsque le giravion est situé à une altitude supérieure à une altitude de validation du préenclenchement, cette altitude de validation du préenclenchement étant égale à la première altitude maximale multipliée par un coefficient de préenclenchement inférieur au coefficient d'enclenchement, et par suite inférieur à 1. Le coefficient de préenclenchement est par exemple égal à 0,80.

De plus, le procédé peut comporter une limitation de la consommation énergétique du giravion dans le cas où le calculateur détermine que la quantité prédite d'énergie électrique intermédiaire devient, en cours de vol, insuffisante pour que le giravion atteigne le point objectif. Cette limitation de la consommation énergétique du giravion peut comporter les sous-étapes suivantes :
- désenclenchement d'un générateur du giravion si ce générateur consomme plus d'énergie mécanique en mode générateur de courant électrique qu'il ne fournit d'énergie électrique au réseau de bord ou audit au moins un dispositif de stockage d'énergie électrique,
- délestage électrique de barres d'alimentation électrique non-essentielles, à savoir n'alimentant pas des équipements essentiels à la réalisation du vol du giravion,
- disjonction des équipements et consommateurs d'électricité connectés au réseau électrique de bord et qui ne sont pas indispensables à la réalisation du vol du giravion,
- réduction des prélèvements réalisés sur ledit au moins un moteur thermique si ces prélèvements ne sont pas essentiels.

La réduction des prélèvements réalisés sur ledit au moins un moteur thermique sont par exemple destinés au chauffage de l'habitacle du giravion, et de tels prélèvements peuvent être considérés comme non essentiels si les membres de l'équipage du giravion portent, par exemple, un équipement de survie. De même si le temps est beau et bon en montagne, ou si l'altitude « objectif » n'est pas dans une zone en conditions givrantes, les prélèvements participant par exemple au désembuage pare-brise et/ou dégivrage peuvent être réduits ou déconnectés. La réduction de ces prélèvements peuvent aller jusqu'à leur arrêt.

La présente invention a aussi pour objet un giravion comportant :
- au moins un rotor, tel qu'un rotor principal, un rotor auxiliaire et/ou une ou plusieurs hélices,
- une installation motrice hybride munie d'une installation motrice électrique et d'une installation motrice thermique reliées audit au moins un rotor par une chaîne de transmission mécanique, l'installation motrice thermique comprenant au moins un moteur thermique et au moins un calculateur moteur dudit au moins un moteur thermique, l'installation motrice électrique comprenant au moins une machine électrique, au moins un dispositif de contrôle de ladite au moins une machine électrique et au moins un dispositif de stockage d'énergie électrique alimentant ladite au moins une machine électrique en énergie électrique, et
- un calculateur.

Le calculateur du giravion est configuré pour la mise en oeuvre du procédé de gestion d'un vol d'un giravion en altitude élevée à l'aide d'une installation motrice hybride tel que précédemment décrit.

L'installation motrice électrique peut être présente dès la conception et la fabrication du giravion. L'installation motrice électrique peut aussi avoir été ajoutée lors d'une opération d'amélioration du giravion afin de permettre au giravion d'augmenter son domaine de vol. L'installation motrice électrique peut aussi se présenter sous la forme de plusieurs kits disposant de quantités d'énergie électrique disponibles différentes et, par suite, de masses différentes, que l'opérateur du giravion peut installer en fonction des missions à réaliser.

L'invention et ses avantages apparaîtront avec plus de détails dans le cadre de la description qui suit avec des exemples de réalisation donnés à titre illustratif en référence aux figures annexées qui représentent :
- la figure 1, un schéma en vue de côté d'un giravion selon l'invention,
- la figure 2, un schéma synoptique d'un procédé d'aide au pilotage selon l'invention,
- la figure 3, un schéma synoptique d'un procédé d'aide au pilotage selon l'invention, et
- la figure 4, un schéma représentant le giravion, le point objectif et les altitudes caractéristiques de ce procédé.

Les éléments présents dans plusieurs figures distinctes sont affectés d'une seule et même référence.

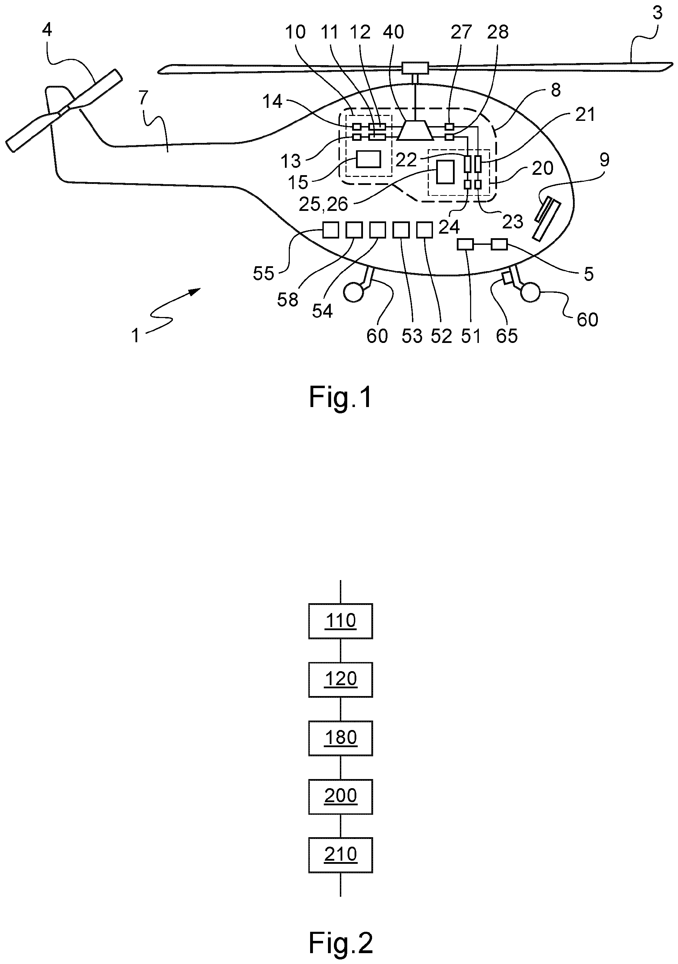

La figure 1 représente un giravion 1 comportant un fuselage 2, au moins un rotor 3,4 et une installation motrice hybride 8. Le au moins un rotor 3,4 peut comporter par exemple un rotor principal participant à la sustentation, voire à l'avancement du giravion 1. Le au moins un rotor 3,4 peut aussi comporter un rotor auxiliaire apte à s'opposer au couple induit par la rotation du rotor principal 3 sur son fuselage 2 et à permettre le contrôle du giravion 1 en lacet. Le au moins un rotor 3,4 peut encore comporter une ou plusieurs hélices participant à l'avancement du giravion 1.

Selon l'exemple représenté sur la figure 1, le giravion 1 comporte un rotor principal 3 agencé au dessus du fuselage 2 et un rotor auxiliaire 4, à l'extrémité d'une poutre de queue 7. Le giravion 1 peut aussi comporter une ou plusieurs hélices.

L'installation motrice hybride 8 comporte une installation motrice thermique 10 et une installation motrice électrique 20 reliées aux rotors 3,4 par une chaîne de transmission mécanique 40. L'installation motrice thermique 10 comporte au moins un moteur thermique 11,12, un calculateur moteur 13,14 pour chaque moteur thermique 11,12 et au moins un réservoir 15 contenant du carburant alimentant chaque moteur thermique 11,12.

Un moteur thermique 11,12 peut être par exemple un moteur à pistons ou une turbine à gaz, désignée également « turbomoteur ». Chaque calculateur moteur 13,14 permet notamment de commander le démarrage et l'arrêt d'un moteur thermique 11,12 ainsi que de commander et modifier le régime de ce moteur thermique 11,12 afin de réguler son fonctionnement. Un tel calculateur moteur 13,14 peut aussi comporter des capteurs afin de mesurer des paramètres de fonctionnement du moteur thermique 11,12, tels que par exemple une température, une vitesse de rotation d'un organe mobile...

L'installation motrice électrique 20 comporte au moins une machine électrique 21,22 ainsi qu'au moins un dispositif de contrôle 23,24 et au moins un dispositif de stockage d'énergie électrique 25 alimentant la ou les machines électriques 21,22 en énergie électrique.

L'installation motrice électrique 20 peut comporter un seul dispositif de contrôle 23 pour gérer tous les moteurs électriques 21,22 lorsque l'installation motrice électrique 20 comporte au moins un moteur électrique 21,22 ou bien un dispositif de contrôle 23,24 par moteur électrique 21,22 lorsque l'installation motrice électrique 20 comporte au moins deux moteurs électriques 21,22.

Un dispositif de contrôle 23,24 permet notamment de piloter l'alimentation électrique d'une ou de plusieurs machines électriques 21,22 et la coupure de cette alimentation électrique ainsi que de commander et de modifier le régime de cette ou ces machines électriques 21,22 afin de réguler son fonctionnement ou leurs fonctionnements. Un tel dispositif de contrôle 23,24 peut comporter un calculateur et par exemple un contrôleur de vitesse électronique désigné par l'acronyme ESC pour la désignation en langue anglaise « Electronic Speed Controller ».

Ledit au moins un dispositif de stockage d'énergie électrique 25 peut comporter un dispositif rechargeable, telle une batterie rechargeable, ou bien un dispositif non rechargeable, telle une batterie non rechargeable ou une pile à combustible ou une pile thermique par exemple. Ledit au moins un dispositif de stockage d'énergie électrique 25 peut être dédié au fonctionnement de l'installation motrice électrique 20 ou bien être partagé avec un réseau de bord du giravion 1 et utilisée pour alimenter en énergie électrique ce réseau de bord et les équipements électriques et électroniques qui lui sont connectés.

L'installation motrice hybride 8 permet d'entraîner en rotation le ou les rotors 3,4 par l'intermédiaire de la chaîne de transmission mécanique 40, par l'installation motrice électrique 20 et/ou par l'installation motrice thermique 10.

La chaîne de transmission mécanique 40 est reliée d'une part audit aux rotors 3,4 et d'autre part audit aux moteurs thermiques 11,12 et aux machines électriques 21,22. La chaîne de transmission mécanique 40 peut par exemple comporter une boîte de transmission principale de puissance, agencée entre d'une part les installations motrices thermique 10 et électrique 20 et d'autre part le rotor principal 3, un mât du rotor principal 3 étant lié à une sortie de la boîte de transmission principale de puissance. La chaîne de transmission mécanique 40 peut aussi comporter au moins une boîte de transmission auxiliaire de puissance agencée entre la boîte de transmission principale de puissance et le rotor auxiliaire 4.

Selon l'exemple de la figure 1, l'installation motrice thermique 10 comporte deux moteurs thermiques 11,12, deux calculateurs moteur 13,14 et un réservoir 15 alors que l'installation motrice électrique 20 comporte deux machines électriques 21,22, deux dispositifs de contrôle 23,24 et un dispositif de stockage d'énergie électrique 25.

Selon un autre aspect, au moins une machine électrique 21 est réversible et peut à ce titre fonctionner d'une part comme un moteur électrique et d'autre part comme un générateur électrique 26. Un dispositif de stockage d'énergie électrique 25 est dans ce cas rechargeable en énergie électrique et comporte par exemple une batterie rechargeable.

Le giravion 1 peut par ailleurs comporter un récepteur de localisation 52 d'un système de localisation par satellites fournissant une position du giravion 1 dans un repère terrestre. Cette position peut comporter des coordonnées du giravion 1 dans le repère terrestre, par exemple en latitude et longitude, ainsi que son altitude.

Le giravion 1 peut par ailleurs comporter un baromètre 53 et un thermomètre 54 permettant de mesurer une pression atmosphérique initiale et une température initiale au niveau du giravion 1.

Le giravion 1 peut par ailleurs comporter un train d'atterrissage 60 muni d'un dispositif de détermination de masse 65, mesurant une charge subie par ce train d'atterrissage 60 afin d'en déduire la masse totale initiale du giravion 1 avant décollage.

Le giravion 1 peut par ailleurs comporter un dispositif de réception 55 pour recevoir des informations, telles que des informations relatives à une mission à réaliser ou encore des prévisions météorologiques.

Le giravion 1 peut par ailleurs comporter un dispositif de mesure, par exemple un variomètre 58, dédié à la mesure d'une vitesse ascensionnelle du giravion 1. Une telle vitesse ascensionnelle peut également être déterminée à l'aide du récepteur de localisation 52.

Le giravion 1 peut par ailleurs comporter un calculateur 5, une mémoire 51, et un dispositif de visualisation 9, tel un écran, un affichage tête haute ou un affichage intégré au casque du pilote par exemple, et une interface permettant la saisie d'informations. Cette interface est reliée par une liaison filaire ou sans fil au calculateur 5 pour permettre la transmission d'un signal, analogique ou numérique, électrique ou optique, porteur des informations saisies. L'interface peut comporter par exemple un clavier, une dalle tactile du dispositif de visualisation 9, une souris, un trackball ou encore une commande vocale ou visuelle.

Le calculateur 5 peut comprendre par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur... Le calculateur 5 peut être dédié à la réalisation du procédé selon l'invention ou bien être partagé avec d'autres fonctions du giravion 1 et être par exemple intégré à un système avionique du giravion 1.

Le calculateur 5 peut comporter la mémoire 51 ou être relié à la mémoire 51 par une liaison filaire ou sans fil permettant la transmission d'un signal, analogique ou numérique, électrique ou optique. La mémoire 51 peut stocker un ou plusieurs algorithmes dédié à la réalisation d'un procédé d'aide au pilotage d'un giravion en hautes altitudes grâce à l'apport d'une puissance mécanique provenant d'une installation motrice électrique dont un schéma synoptique est représenté sur la figure 2.

Ce procédé comporte les étapes suivantes.

Au cours d'une étape de définition 110, un point de décollage PtD du giravion 1 et l'altitude initiale de ce point de décollage PtD sont définis.

Au cours d'une étape de définition 120, un point objectif PtO à atteindre et l'altitude finale de ce point objectif PtO sont définis.

Une position initiale du point de décollage PtD et une position finale du point objectif PtO peuvent être définies par leurs coordonnées respectives dans un repère terrestre, par exemple par leurs latitudes et leurs longitudes dans ce repère terrestre.

Les coordonnées de la position initiale du point de décollage PtD et son altitude initiale peuvent être fournies par le récepteur de localisation 52, être paramétrées par un membre d'équipage via l'interface ou encore être réceptionnées via le dispositif de réception 55.

De même, les coordonnées de la position finale du point objectif PtO et son altitude finale peuvent être paramétrées par un membre d'équipage via l'interface ou encore réceptionnées via le dispositif de réception 55.

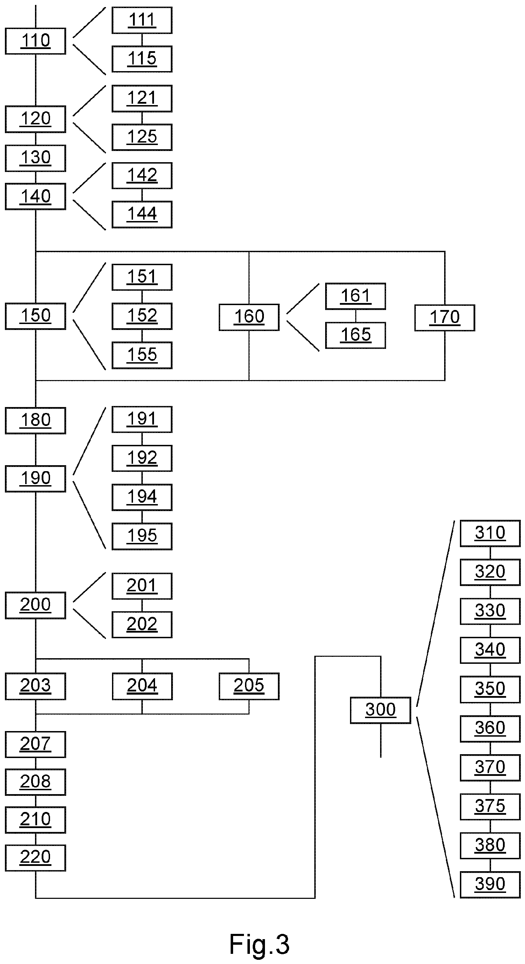

L'étape de définition 110 peut aussi comporter des sous-étapes représentées sur la figure 3. La définition 110 du point de décollage PtD et de l'altitude initiale peut comporter les sous-étapes suivantes :
- définition 111 d'une position initiale du point de décollage PtD du giravion, et
- détermination 115 avec le calculateur 5 de l'altitude initiale du point de décollage PtD, à partir d'une base de données terrain ou d'une cartographie en trois dimensions fournissant pour chaque position son altitude.

De même, la définition 120 du point objectif PtO et de l'altitude finale peut comporter les sous-étapes suivantes :
- définition 121 d'une position finale du point objectif PtO, et
- détermination 125 avec le calculateur 5 de l'altitude finale du point objectif PtO, à partir de la position du point objectif PtO et de la base de données terrain ou de la cartographie en trois dimensions.

Le procédé peut comporter une détermination 130 d'une distance de vol entre le point de décollage PtD et le point objectif PtO par le calculateur 5 à l'aide des positions initiale et finale ainsi que des altitudes initiale et finale.

Le calculateur 5 peut calculer la distance de vol selon une trajectoire de vol rectiligne entre le point de décollage PtD et le point objectif PtO.

Le calculateur 5 peut alternativement déterminer une trajectoire de vol non rectiligne entre le point de décollage PtD et le point objectif PtO en prenant en compte le relief mémorisé dans la cartographie en trois dimensions, des zones interdites de survol telles que des zones d'habitation et/ou la base de données terrain stockées dans la mémoire 51 et en prenant éventuellement en compte les conditions météorologiques dont des prévisions ont par exemple été réceptionnées par le dispositif de réception 55 et stockées dans la mémoire 51. Cette trajectoire de vol non rectiligne entre le point de décollage PtD et le point objectif PtO peut également être déterminée par un calculateur dédiée et/ou être stockée dans la mémoire 51.

Le calculateur 5 peut alors calculer la distance de vol selon cette trajectoire de vol non rectiligne.

Le procédé peut comporter une étape de vérification 140 de la faisabilité de la mission en fonction de la distance de vol, d'une masse totale initiale du giravion 1 avant décollage, d'une quantité initiale de carburant embarqué contenu dans le réservoir 15 et d'une loi de consommation de carburant du giravion 1. Le calculateur 5 détermine si la quantité initiale de carburant embarqué est suffisante pour atteindre le point objectif PtO et revenir au point de décollage PtD. Cette étape de vérification 140 peut aussi prendre en compte la masse de la charge utile ou bien de la ou des personnes à embarquer dans le giravion et/ou à débarquer du giravion au point objectif.

La loi de consommation de carburant est stockée dans la mémoire 51 et peut être sous la forme d'abaques, de tableaux de valeurs ou encore d'équations.

Les paramètres utilisés par la loi de consommation de carburant, à savoir la masse totale initiale du giravion 1 et la quantité initiale de carburant embarqué peuvent avoir préalablement été paramétrés avec l'interface et mémorisés dans la mémoire 51.

La quantité initiale de carburant embarqué contenu dans le réservoir 15 peut aussi être mesurée par une jauge volumétrique ou massique intégrée au réservoir 15.

La masse totale initiale du giravion peut aussi être mesurée par le dispositif de détermination de masse 65.

L'étape de vérification 140 peut comporter une étape de génération d'une alerte 142 avec un alerteur sur commande du calculateur 5 si la quantité initiale de carburant est insuffisante. L'alerte peut être sous forme visuelle, par exemple par l'affichage d'un voyant rouge sur le dispositif de visualisation 9 et éventuellement par l'affichage de la quantité de carburant supplémentaire à ajouter pour atteindre le point objectif PtO et revenir au point de décollage PtD, ou sonore ou tactile.

L'étape de vérification 140 peut aussi comporter une étape d'affichage 144 que la mission peut être le cas échéant réalisée.

Ensuite, au cours d'une étape de détermination 180, le calculateur 5 détermine une première altitude maximale AM1 atteignable par le giravion 1 à l'aide uniquement de l'installation motrice thermique 10 selon une première loi d'altitude, en fonction de la masse totale initiale du giravion 1, de la quantité initiale de carburant embarqué contenu dans le réservoir 15 au décollage, d'une pression atmosphérique et d'une température de l'air, et d'un état de vieillissement des moteurs thermiques 11,12.

La première loi d'altitude est stockée dans la mémoire 51 et peut être sous la forme d'abaques, de tableaux de valeurs ou encore d'équations.

Les paramètres utilisés par la première loi d'altitude peuvent avoir préalablement été stockés dans la mémoire 51 suite à un paramétrage par un individu ou suite à une réception via le dispositif de réception 55.

L'état de vieillissement de chaque moteur thermique 11,12 peut aussi être considéré égal au dernier état de vieillissement déterminé précédemment pour le giravion 1 lors d'un vol précédent. L'état de vieillissement de chaque moteur thermique 11,12 peut aussi être estimé au point objectif PtO à l'aide de plusieurs valeurs des états de vieillissements déterminés précédemment et en fonction du temps nécessaire pour atteindre le point objectif PtO et, de la durée de vol du giravion 1 depuis le dernier état de vieillissement déterminé.

Alternativement, l'état de vieillissement de chaque moteur thermique 11,12 peut être considéré égal à l'état de vieillissement maximum autorisé.

Le procédé selon l'invention peut aussi comporter une étape d'estimation 150 de la masse totale prédite du giravion 1 au point objectif PtO comportant les sous-étapes suivantes :
- détermination 151 de la masse totale initiale du giravion 1 au décollage, par paramétrage par un individu via l'interface ou par mesure à l'aide du dispositif de détermination de masse 65,
- estimation 152 d'une masse prédite de carburant consommé entre le point de décollage PtD et le point objectif PtO selon la loi de consommation de carburant en fonction de la masse totale initiale, de la distance de vol entre le point de décollage PtD et le point objectif PtO, et des conditions météorologiques, et
- estimation 155 de la masse totale prédite du giravion 1 au point objectif PtO par soustraction de la masse prédite de carburant consommé à la masse totale initiale.

La première loi d'altitude peut aussi prendre en compte une pression atmosphérique initiale et une température de l'air initiale mesurées par exemple respectivement par le baromètre 53 et le thermomètre 54.

La première loi d'altitude peut aussi prendre en compte une pression atmosphérique prédite et une température de l'air prédite au niveau du point objectif PtO. Le procédé peut alors comporter une détermination 160 de la pression atmosphérique prédite et de la température prédite de l'air au point objectif PtO comprenant les sous-étapes suivantes :
- détermination 161 de la pression atmosphérique initiale et de la température initiale au point de décollage PtD, et
- calcul 165 de la pression atmosphérique prédite et de la température prédite en fonction de la pression atmosphérique initiale, de la température initiale, de l'altitude initiale et de l'altitude finale par le calculateur 5.

Le calculateur 5 applique dans ce but des lois connues de variation de la pression atmosphérique et de la température en fonction de l'altitude. Ces lois peuvent être stockées dans la mémoire 51.

De plus, lors de l'étape de détermination 180, le calculateur 5 peut aussi prendre en compte une configuration aérodynamique du giravion 1 lorsqu'un ou plusieurs éléments ont été ajoutés au giravion par rapport à une configuration aérodynamique de base et sont susceptibles de modifier le comportement aérodynamique du giravion et/ou ses performances. Un tel élément est par exemple un treuil, une civière posée à l'extérieur de l'aéronef ou encore un système visant à protéger une entrée d'air de l'installation motrice thermique 10.

Afin de prendre en compte cette configuration aérodynamique du giravion 1, le procédé peut comporter une étape de paramétrage 170 de la configuration aérodynamique du giravion 1. Lors de cette étape de paramétrage 170, un membre d'équipage peut par exemple paramétrer les éléments ajoutés à la configuration aérodynamique de base du giravion 1 via l'interface. Le calculateur 5 peut prendre ainsi en compte la configuration aérodynamique du giravion 1, en connaissant, éventuellement via des informations stockées dans la mémoire 51, les effets de chacun de ces éléments sur la détermination de la première altitude atteignable.

Suite à cette étape de paramétrage 170, un coefficient de pondération peut être appliqué à la première loi d'altitude, à la seconde loi d'altitude ainsi qu'à la loi de consommation de carburant, ce coefficient de pondération étant fonction de la configuration aérodynamique du giravion 1. Des valeurs de ce coefficient de pondération associées respectivement à différentes configurations aérodynamiques prédéfinies du giravion 1 peuvent être stockées dans la mémoire 51. Le coefficient de pondération est par exemple inférieur à 1 lorsque la configuration aérodynamique courante du giravion 1 à laquelle il est associé entraîne des performances du giravion 1 dégradées par rapport aux performances liées à la configuration aérodynamique de base.

Puis au cours d'une étape d'estimation 200, le calculateur 5 détermine une seconde altitude maximale AM2 atteignable par le giravion 1 à l'aide de l'installation motrice thermique 10 et de l'installation motrice électrique 20 selon une seconde loi d'altitude, en fonction de la première altitude maximale AM1, de la masse totale prédite du giravion 1 et d'une quantité prédite d'énergie électrique intermédiaire disponible dans le dispositif de stockage d'énergie électrique 15 à la première altitude maximale AM1.

La seconde loi d'altitude est stockée dans la mémoire 51 et peut être sous la forme d'abaques, de tableaux de valeurs ou encore d'équations.

La première altitude maximale AM1 et la masse totale prédite du giravion 1 ont été précédemment déterminées. La quantité prédite d'énergie électrique intermédiaire peut être considérée égale à la quantité initiale d'énergie électrique disponible dans le dispositif de stockage d'énergie électrique 25 au décollage si aucune énergie électrique ou peu d'énergie électrique contenue dans le dispositif de stockage d'énergie électrique 25 ne sera consommée avant d'arriver à la première altitude maximale AM1. C'est notamment le cas si le giravion 1 comporte une ou plusieurs batteries destinées exclusivement à l'alimentation électrique d'un réseau électrique de bord du giravion 1 ou si le giravion 1 comporte un générateur alimentant électriquement le réseau électrique de bord du giravion 1, le dispositif de stockage d'énergie électrique 25 étant dédié uniquement à l'alimentation électrique des machines électriques 21,22.

Le procédé peut aussi comporter une étape de détermination 190 de la quantité prédite d'énergie électrique intermédiaire munie des sous-étapes suivantes :
- détermination 191 d'une quantité initiale d'énergie électrique disponible dans le dispositif de stockage d'énergie électrique 25 au décollage,
- estimation 192 d'une quantité prédite d'énergie électrique consommée entre le point de décollage PtD et un point situé à la première altitude maximale AM1 entre le point de décollage PtD et le point objectif PtO,
- estimation 195 de la quantité prédite d'énergie électrique intermédiaire par soustraction de la quantité prédite d'énergie électrique consommée à la quantité initiale d'énergie électrique.

Le dispositif de stockage d'énergie électrique 25 comporte un dispositif de gestion transmettant un signal porteur d'une information relative à la quantité initiale d'énergie électrique vers le calculateur 5.

La quantité prédite d'énergie électrique consommée peut être estimée par exemple selon une loi de consommation électrique du giravion 1 en vol et en fonction de la distance de vol.

De plus, si l'installation motrice électrique 20 comporte un générateur électrique 26 ou si une machine électrique 21,22 est réversible, l'étape de détermination 190 peut comporter une étape d'estimation 194 d'une quantité prédite d'énergie électrique susceptible d'être générée pendant le vol du giravion 1 jusqu'à la première altitude maximale AM1 par le générateur électrique 26 ou la machine électrique 21,22 réversible. Cette énergie électrique susceptible d'être générée pendant le vol peut être stockée dans le dispositif de stockage d'énergie électrique 25 si ce dispositif de stockage d'énergie électrique 25 n'est pas entièrement chargé en énergie électrique. La quantité prédite d'énergie électrique intermédiaire estimée lors de l'étape d'estimation 195 est alors égale à une somme de la quantité prédite d'énergie électrique susceptible d'être générée pendant le vol et de la quantité initiale d'énergie électrique, moins la quantité prédite d'énergie électrique consommée.

Par ailleurs, l'étape d'estimation 200 de la seconde altitude maximale AM2 peut comporter les sous-étapes suivantes :
- calcul 201 d'un supplément d'altitude atteignable par le giravion 1 à l'aide de l'installation motrice électrique 20 selon la seconde loi d'altitude en fonction de la masse totale prédite du giravion 1 et de ladite quantité prédite d'énergie électrique intermédiaire, et
- calcul 202 de la seconde altitude maximale AM2 par addition de la première altitude maximale AM1 et du supplément d'altitude.

Dans ce cas, le calculateur 5 peut calculer à l'aide de la seconde loi d'altitude, ce supplément d'altitude fourni par l'apport de puissance de l'installation motrice électrique 20 au-delà de la première altitude maximale AM1.

Au cours d'une étape d'affichage 210, le dispositif de visualisation 9 affiche une information relative à une comparaison entre l'altitude finale et la seconde altitude maximale AM2.

Le dispositif de visualisation 9 peut par exemple afficher un symbole ou allumer un voyant vert lorsque la seconde altitude maximale AM2 est supérieure à l'altitude finale, ainsi qu'éventuellement les valeurs de l'altitude finale et de la seconde altitude maximale AM2 afin que le pilote du giravion 1 connaissant la différence entre l'altitude finale et la seconde altitude maximale AM2, et donc la marge dont il dispose pour atteindre le point objectif PtO.

Si l'altitude finale du point objectif PtO est supérieure à la seconde altitude maximale AM2, le dispositif de visualisation 9 peut par exemple afficher un autre symbole ou allumer un voyant rouge lors de l'étape d'affichage 210. Un dispositif d'alerte peut aussi générer une alerte lors d'une génération d'une alerte 220 lorsque l'altitude finale est supérieure à la seconde altitude maximale AM2. L'alerte peut être visuelle ou sonore par exemple.

De plus, si l'altitude finale du point objectif PtO est supérieure à la seconde altitude maximale AM2, le procédé peut comporter des étapes supplémentaires. Lors d'une étape d'estimation 203, le calculateur 5 peut estimer une masse totale « objectif » du giravion 1 permettant que la seconde altitude maximale AM2 soit supérieure ou égale à l'altitude finale et, lors de l'affichage 210, le dispositif de visualisation 9 affiche alors une information relative à la masse totale « objectif ».

Lors d'une étape d'estimation 204, le calculateur 5 peut estimer une quantité supplémentaire de carburant à ajouter au réservoir 15 permettant que la seconde altitude maximale AM2 soit supérieure ou égale à l'altitude finale et, lors de l'affichage 210, le dispositif de visualisation 9 affiche alors une information relative à la quantité supplémentaire de carburant.

Lors d'une étape d'estimation 205, le calculateur 5 peut estimer une quantité supplémentaire d'énergie électrique à ajouter au giravion 1 permettant que la seconde altitude maximale AM2 soit supérieure ou égale à l'altitude finale et, lors de l'affichage 210, le dispositif de visualisation 9 affiche alors une information relative à la quantité supplémentaire d'énergie électrique.

La quantité supplémentaire de carburant à ajouter au réservoir 15, la masse totale « objectif » du giravion 1 et/ou la quantité supplémentaire d'énergie électrique à ajouter au giravion 1 peuvent être estimées par le calculateur 5 à l'aide de la seconde loi d'altitude par différentes méthodes, par exemple par itération ou par convergence.

Le procédé peut également comporter une étape de détermination 208 d'une altitude d'enclenchement A2 de chaque machine électrique 21,22 en fonction de la première altitude maximale AM1, de l'altitude finale, de la quantité prédite d'énergie électrique intermédiaire et d'une marge d'enclenchement. A cette altitude d'enclenchement A2 et au dessus de cette altitude d'enclenchement A2, chaque machine électrique 21,22 entraîne en rotation chaque rotor 3,4 conjointement avec les moteurs thermiques 11,12, via la chaîne de transmission mécanique 40 afin d'atteindre le point objectif PtO.

Le procédé peut aussi comporter une étape de détermination 207 d'une altitude de préenclenchement A1 de chaque machine électrique 21,22 en fonction de la première altitude maximale AM1, de l'altitude finale du point objectif PtO, de la quantité prédite d'énergie électrique intermédiaire et d'une marge de préenclenchement. L'altitude de préenclenchement A1 est inférieure à l'altitude d'enclenchement A2. A partir de cette altitude de préenclenchement A1 et jusqu'à ce que le giravion 1 atteigne l'altitude d'enclenchement A2, chaque machine électrique 21,22 est démarrée, mais n'entraîne pas le ou les rotors 3,4.

La marge d'enclenchement et la marge de préenclenchement peuvent être fonction d'un mode de vol choisi et/ou de la quantité prédite d'énergie électrique intermédiaire.

Chaque machine électrique 21,22 est par exemple reliée à la chaîne de transmission mécanique 40 par une roue libre 27,28 permettant ainsi, à partir de l'altitude de préenclenchement A1 que chaque machine électrique 21,22 soit démarrée et ait une vitesse de rotation légèrement inférieure à la vitesse de rotation de la chaîne de transmission mécanique 40. Chaque machine électrique 21,22 ne transmet alors pas de couple ni de puissance à la chaîne de transmission mécanique 40 grâce aux roues libres 27,28.

A partir de l'altitude d'enclenchement A2, la vitesse de rotation de chaque machine électrique 21,22 augmente jusqu'à atteindre la vitesse de rotation permettant à chaque machine électrique 21,22 de transmettre un couple et une puissance mécanique à la chaîne de transmission mécanique 40, et par suite à chaque rotor 3,4, par l'intermédiaire des roues libres 27,28.

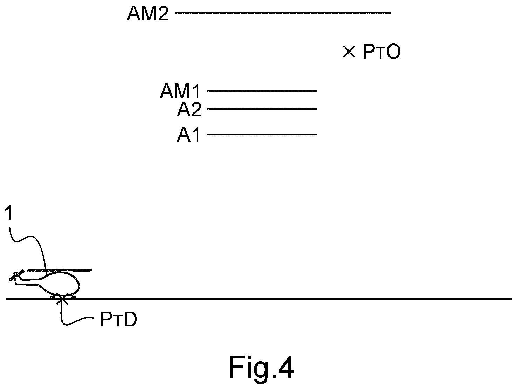

La figure 4 représente notamment les positions des altitudes de préenclenchement A1 et d'enclenchement A2 par rapport aux altitudes initiale et finale.

Le procédé peut également comporter une étape de réalisation 300 d'un vol du giravion 1 du point de décollage PtD jusqu'au point objectif PtO. Cette étape de réalisation 300 d'un vol est notamment munie d'une sous-étape d'enclenchement 390 de chaque machine électrique 21,22 à une altitude d'enclenchement A2.

L'altitude d'enclenchement A2 peut avoir été déterminée avant le décollage du giravion 1, au cours de l'étape de détermination 208 d'une altitude d'enclenchement A2.

Au cours du vol, le procédé peut comporter des étapes de mise à jour des paramètres déterminés avant le décollage du giravion 1 et dont les valeurs peuvent être susceptibles de changer si les conditions de vol rencontrées sont différentes des prévisions ou bien si le giravion 10 a suivi une trajectoire différente de la trajectoire envisagée. La mission peut aussi être modifiée en cours de vol en ajoutant par exemple un point de passage à la trajectoire de vol, avant ou après le point objectif PtO afin par exemple de secourir une personne. Ces mises à jour prennent avantageusement en compte cette modification de la trajectoire.

De fait, l'étape de réalisation 300 du vol peut comporter les étapes suivantes :
- mise à jour 310 de la première altitude maximale AM1 atteignable par le giravion 1,
- mise à jour 320 de la quantité prédite d'énergie électrique intermédiaire,
- mise à jour 330 de la seconde altitude maximale AM2 atteignable par le giravion 1,
- mise à jour 340 de l'altitude d'enclenchement A2 de la au moins une machine électrique 21,22.

La sous-étape d'enclenchement 390 peut aussi être effectuée durant le vol dès qu'un paramètre de surveillance qui est fonction de la vitesse ascensionnelle du giravion 1 soit inférieur à un taux ascensionnel d'enclenchement et qu'une condition complémentaire d'enclenchement soit validée. L'altitude d'enclenchement A2 est alors égale à l'altitude du giravion 1 pour lequel le paramètre de surveillance est égal au taux ascensionnel d'enclenchement.

La condition complémentaire d'enclenchement permet d'éviter de déclencher chaque machine électrique 21,22 trop tôt, lors d'une manoeuvre du giravion 1 engendrant une baisse de ce paramètre de surveillance, et de consommer alors de l'énergie électrique qui pourrait manquer pour atteindre le point objectif PtO.

Dans ce but, l'étape de réalisation 300 du vol du giravion 1 peut comporter les sous-étapes suivantes :
- mesure 350 d'une vitesse ascensionnelle du giravion 1 par le variomètre 58,
- calcul 360 d'un paramètre de surveillance en fonction de la vitesse ascensionnelle, par exemple égal à une dérivée première de la vitesse ascensionnelle du giravion 1, et
- enclenchement 390 de chaque machine électrique 21,22 lorsque le paramètre de surveillance est inférieur à un taux ascensionnel d'enclenchement et lorsqu'une condition complémentaire d'enclenchement est validée.

La condition complémentaire d'enclenchement peut être validée, par exemple, lorsqu'aucune action d'annulation de l'enclenchement n'a été effectuée par un pilote du giravion 1 durant une première durée prédéterminée pendant laquelle le paramètre de surveillance est et reste inférieur au taux ascensionnel d'enclenchement. L'étape de réalisation 300 du vol comporte alors une étape d'affichage affichage 370 d'une information que le paramètre de surveillance est inférieur au taux ascensionnel d'enclenchement. L'action d'annulation peut être effectuée par un interrupteur dédié ou par l'interface. Le pilote du giravion peut également valider la condition complémentaire d'enclenchement avant la fin de la première durée prédéterminée à l'aide d'un interrupteur dédié ou de l'interface.

La condition complémentaire d'enclenchement peut également être validée lorsqu'une action de validation de l'enclenchement est effectuée par le pilote du giravion 1 après que le paramètre de surveillance ait été inférieur au taux ascensionnel d'enclenchement. L'étape de réalisation 300 du vol comporte alors également l'étape d'affichage 370 d'une information que le paramètre de surveillance est inférieur au taux ascensionnel d'enclenchement. L'action de validation peut être effectuée par un interrupteur dédié ou par l'interface.

La condition complémentaire d'enclenchement peut aussi être validée lorsque le giravion 1 est situé à une altitude supérieure à une altitude de validation de l'enclenchement, cette altitude de validation de l'enclenchement étant égale à la première altitude maximale AM1 multipliée par un coefficient d'enclenchement inférieur à 1.

L'étape de réalisation 300 du vol du giravion peut également comporter une sous-étape de préenclenchement 380 de chaque machine électrique 21,22, qui peut être réalisée lorsque le giravion 1 atteint l'altitude de préenclenchement A1 déterminée le cas échéant lors d'une étape de détermination 207 avant le décollage du giravion 1.

La sous-étape de préenclenchement 380 de chaque machine électrique 21,22 peut aussi être réalisée lorsque le paramètre de surveillance est inférieur à un taux ascensionnel de préenclenchement prédéterminé et lorsqu'une condition complémentaire de préenclenchement est validée. L'altitude de préenclenchement A1 est alors égale à l'altitude du giravion 1 pour lequel le paramètre de surveillance est égal au taux ascensionnel de préenclenchement. Le taux ascensionnel de préenclenchement est supérieur au taux ascensionnel d'enclenchement.

La condition complémentaire de préenclenchement peut être validée par exemple lorsqu'aucune action d'annulation du préenclenchement n'a été effectuée par un pilote du giravion 1 durant une seconde durée prédéterminée pendant laquelle le paramètre de surveillance est et reste inférieur au taux ascensionnel de préenclenchement. L'étape de réalisation 300 du vol comporte alors une étape d'affichage 375 d'une information que le paramètre de surveillance est inférieur au taux ascensionnel de préenclenchement. L'action d'annulation peut être effectuée par un interrupteur dédié ou par l'interface. Le pilote du giravion peut également valider la condition complémentaire de préenclenchement avant la fin de la deuxième durée prédéterminée à l'aide d'un interrupteur dédié ou de l'interface.

La condition complémentaire de préenclenchement peut également être validée lorsqu'une action de validation du préenclenchement est effectuée par le pilote du giravion 1 après que le paramètre de surveillance ait été inférieur au taux ascensionnel de préenclenchement. L'étape de réalisation 300 du vol comporte alors également l'étape d'affichage 375 d'une information que le paramètre de surveillance est inférieur au taux ascensionnel de préenclenchement. L'action de validation peut être effectuée par un interrupteur dédié ou par l'interface.

La condition complémentaire de préenclenchement peut aussi être validée lorsque le giravion 1 est situé à une altitude supérieure à une altitude de validation du préenclenchement, cette altitude de validation du préenclenchement étant égale à la première altitude maximale AM1 multipliée par un coefficient de préenclenchement inférieur au coefficient d'enclenchement et donc inférieur à 1.

## Revendications

1. Procédé d'aide au pilotage d'un giravion (1) en hautes altitudes grâce à l'apport de d'une puissance mécanique provenant d'une installation motrice électrique (20) dudit giravion (1), ledit giravion (1) comportant :
- au moins un rotor (3,4),
- une installation motrice hybride (8) munie de ladite installation motrice électrique (20) et d'une installation motrice thermique (10) qui sont reliées audit au moins un rotor (3,4) par une chaîne de transmission mécanique (30), ladite installation motrice thermique (10) comprenant au moins un moteur thermique (11,12), au moins un calculateur moteur (13,14) dudit au moins un moteur thermique (11,12) et au moins un réservoir (15) contenant du carburant alimentant ledit au moins un moteur thermique (11,12), ladite installation motrice électrique (20) comprenant au moins une machine électrique (21,22) ainsi qu'au moins un dispositif de contrôle (23,24) de ladite au moins une machine électrique (21,22) et au moins un dispositif de stockage d'énergie électrique (25) alimentant ladite au moins une machine électrique (21,22) en énergie électrique,
- un dispositif de visualisation (9) et
- un calculateur (5),
**caractérisé en ce que** ledit procédé comporte les étapes suivantes :
- définition (110) d'un point de décollage (PtD) dudit giravion (1) et de son altitude initiale,
- définition (120) d'un point objectif (PtO) pour ledit giravion (1) et de son altitude finale,
- détermination (180) d'une première altitude maximale (AM1) atteignable par ledit giravion (1) à l'aide uniquement de ladite installation motrice thermique (10), par ledit calculateur (5) selon une première loi d'altitude, en fonction d'une masse totale initiale dudit giravion (1) avant décollage, de la quantité initiale de carburant embarqué contenu dans ledit au moins un réservoir (15), d'une pression atmosphérique et d'une température de l'air, et d'un état de vieillissement dudit au moins un moteur thermique (11,12),
- estimation (200) d'une seconde altitude maximale (AM2) atteignable par ledit giravion (1) à l'aide de ladite installation motrice thermique (10) et de ladite installation motrice électrique (20), par ledit calculateur (5) selon une seconde loi d'altitude, en fonction de ladite première altitude maximale (AM1), de ladite masse totale initiale dudit giravion (1), et d'une quantité prédite d'énergie électrique intermédiaire disponible dans ledit au moins un dispositif de stockage d'énergie électrique (25) à ladite première altitude maximale (AM1),
- affichage (210) d'une information relative à une comparaison entre ladite altitude finale et ladite seconde altitude maximale (AM2) sur ledit dispositif de visualisation (9).

2. Procédé selon la revendication 1,
caractérisé en que ladite définition (110) dudit point de décollage (PtD) dudit giravion (1) et de son altitude comporte :
- définition (111) d'une position initiale dudit point de décollage (PtD) dudit giravion (1),
- détermination (115) de ladite altitude initiale dudit point de décollage (PtD), à partir de ladite position initiale dudit point de décollage (PtD) et d'une base de données terrain ou d'une cartographie en trois dimensions,
et ladite définition (120) dudit point objectif (PtO) pour ledit giravion (1) et de son altitude comporte :
- définition (121) d'une position finale dudit point objectif (PtO), et
- détermination (125) de ladite altitude finale dudit point objectif (PtO), à partir de ladite position finale dudit point objectif (PtO) et de ladite base de données terrain ou de ladite cartographie en trois dimensions.

3. Procédé selon l'une quelconque des revendications 1 à 2,
caractérisé en que ledit procédé comporte une détermination (160) d'une pression atmosphérique prédite et d'une température prédite de l'air au point objectif (PtO), ladite pression atmosphérique prédite et ladite température prédite de l'air étant prise en compte pour ladite détermination (180) de ladite d'une première altitude maximale (AM1), comportant :
- détermination (161) d'une pression atmosphérique initiale et d'une température initiale audit point de décollage (PtD), et
- calcul (165) de ladite pression atmosphérique prédite et de ladite température prédite en fonction de ladite pression atmosphérique initiale, de ladite altitude initiale et de ladite altitude finale par ledit calculateur (5).

4. Procédé selon l'une quelconque des revendications 1 à 3,
caractérisé en que ledit procédé comporte une estimation (150) d'une masse totale prédite dudit giravion audit point objectif (PtO) à l'aide dudit calculateur (5) en fonction de ladite masse totale initiale dudit giravion (1) avant décollage et de ladite distance de vol entre ledit point de décollage (PtD) et ledit point objectif (PtO), ladite estimation (150) d'une masse totale comportant :
- détermination (151) de ladite masse totale initiale dudit giravion (1),
- estimation (152) d'une masse prédite de carburant consommé entre ledit point de décollage (PtD) et ledit point objectif (PtO) en fonction de la masse totale initiale, de ladite distance de vol et desdites conditions météorologiques, et
- estimation (155) de ladite masse totale prédite dudit giravion audit point objectif (PtO) par soustraction de ladite masse prédite de carburant consommé à ladite masse totale initiale.

5. Procédé selon l'une quelconque des revendications 1 à 4, **caractérisé en ce que** ledit procédé comporte une détermination (190) de ladite quantité prédite d'énergie électrique intermédiaire disponible dans ledit au moins un dispositif de stockage d'énergie électrique (25) à ladite première altitude maximale (AM1), ladite détermination (190) d'une quantité prédite d'énergie électrique intermédiaire comportant :
- détermination (191) d'une quantité initiale d'énergie électrique disponible dans ledit au moins un dispositif de stockage d'énergie électrique (25) au décollage, ledit au moins un dispositif de stockage d'énergie électrique (25) comportant un dispositif de gestion transmettant un signal porteur d'une information relative à ladite quantité initiale d'énergie électrique vers ledit calculateur (5),
- estimation (192) d'une quantité prédite d'énergie électrique consommée entre ledit point de décollage (PtD) et un point situé à ladite première altitude maximale (AM1),
- estimation (195) de ladite quantité prédite d'énergie électrique intermédiaire par soustraction de ladite quantité prédite d'énergie électrique consommée à ladite quantité initiale d'énergie électrique.

6. Procédé selon la revendication 5,
**caractérisé en ce que** ladite détermination (190) d'une quantité prédite d'énergie électrique intermédiaire comporte une estimation (194) d'une quantité prédite d'énergie électrique susceptible d'être générée pendant le vol dudit giravion (1) jusqu'à ladite première altitude maximale (AM1) par un générateur (26) de ladite installation motrice électrique (20) et stockée dans ledit au moins un dispositif de stockage d'énergie électrique (25), ladite quantité prédite d'énergie électrique intermédiaire estimée lors de ladite estimation (195) étant égale à une somme de ladite quantité prédite d'énergie électrique susceptible d'être générée pendant le vol et de ladite quantité initiale d'énergie électrique, moins ladite quantité prédite d'énergie électrique consommée.

7. Procédé selon l'une quelconque des revendications 1 à 6, **caractérisé en ce que** ledit procédé comporte un paramétrage (170) d'une configuration aérodynamique dudit giravion (1) et lesdites déterminations (180,200) de ladite première altitude maximale (AM1) et de ladite seconde altitude maximale (AM2) prennent en compte ladite configuration aérodynamique.

8. Procédé selon l'une quelconque des revendications 1 à 7, **caractérisé en ce que** ladite estimation (200) de ladite seconde altitude maximale (AM2) comporte :
- calcul (201) d'un supplément d'altitude atteignable par ledit giravion (1) à l'aide de ladite installation motrice électrique (20) selon ladite seconde loi d'altitude en fonction de la masse totale initiale du giravion (1), et de ladite quantité initiale d'énergie électrique disponible dans ledit au moins un dispositif de stockage d'énergie électrique (25), et
- calcul (202) de ladite seconde altitude maximale (AM2) par addition de ladite première altitude maximale (AM1) et dudit supplément d'altitude.

9. Procédé selon l'une quelconque des revendications 1 à 8, **caractérisé en ce que** si ladite altitude finale dudit point objectif (PtO) est supérieure à ladite seconde altitude maximale (AM2), ledit procédé comporte une génération d'une alerte (220).

10. Procédé selon l'une quelconque des revendications 1 à 9, **caractérisé en ce que** si ladite altitude finale dudit point objectif (PtO) est supérieure à ladite seconde altitude maximale (AM2), ledit procédé comporte une estimation (203) d'une masse totale « objectif » dudit giravion (1) permettant que ladite seconde altitude maximale (AM2) soit supérieure ou égale à ladite altitude finale dudit point objectif (PtO) et lors dudit affichage (210), une information relative à ladite masse totale « objectif » est affichée sur ledit dispositif de visualisation (9).

11. Procédé selon l'une quelconque des revendications 1 à 10, **caractérisé en ce que** si ladite altitude finale dudit point objectif (PtO) est supérieure à ladite seconde altitude maximale (AM2), ledit procédé comporte une estimation (204) d'une quantité supplémentaire de carburant à ajouter audit au moins un réservoir (15) permettant que ladite seconde altitude maximale (AM2) soit supérieure ou égale à ladite altitude finale dudit point objectif (PtO) et lors dudit affichage (210), une information relative à ladite quantité supplémentaire de carburant est affichée sur ledit dispositif de visualisation (9).

12. Procédé selon l'une quelconque des revendications 1 à 11, **caractérisé en ce que** si ladite altitude finale dudit point objectif (PtO) est supérieure à ladite seconde altitude maximale (AM2), ledit procédé comporte une estimation (205) d'une quantité supplémentaire d'énergie électrique à ajouter audit giravion (1) permettant que ladite seconde altitude maximale (AM2) soit supérieure ou égale à ladite altitude finale dudit point objectif (PtO) et lors dudit affichage (210), une information relative à ladite quantité supplémentaire d'énergie électrique est affichée sur ledit dispositif de visualisation (9).

13. Procédé selon l'une quelconque des revendications 1 à 12, caractérisé en que ledit procédé comporte une détermination (208) d'une altitude d'enclenchement (A2) de ladite au moins une machine électrique (21,22) en fonction de ladite première altitude maximale (AM1), de ladite altitude finale, de ladite quantité prédite d'énergie électrique intermédiaire et d'une marge d'enclenchement, ladite au moins une machine électrique (21,22) entraînant ledit au moins un rotor (3,4) à partir de ladite altitude d'enclenchement (A2).

14. Procédé selon la revendication 13,
**caractérisé en ce que** ladite marge d'enclenchement est fonction d'un mode de vol choisi et/ou de ladite quantité prédite d'énergie électrique intermédiaire.

15. Procédé selon l'une quelconque des revendications 13 à 14, **caractérisé en ce que** ledit procédé comporte une détermination (207) d'une altitude de préenclenchement (A1) de ladite au moins une machine électrique (21,22) en fonction de ladite première altitude maximale (AM1), de ladite altitude finale dudit point objectif (PtO), de ladite quantité prédite d'énergie électrique intermédiaire et d'une marge de préenclenchement, ladite au moins une machine électrique (21,22) n'entraînant pas ledit au moins un rotor (3,4), ladite altitude de préenclenchement (A1) étant inférieure à ladite altitude d'enclenchement (A2), ladite marge de préenclenchement étant fonction d'un mode de vol choisi et/ou de ladite quantité prédite d'énergie électrique intermédiaire.

16. Procédé selon l'une quelconque des revendications 1 à 15, caractérisé en que ledit procédé comporte une réalisation (300) d'un vol du giravion (1) jusqu'audit point objectif (PtO) munie d'un enclenchement (390) de ladite au moins une machine électrique (21,22) à une altitude d'enclenchement (A2), ladite au moins une machine électrique (21,22) entraînant ledit au moins un rotor (3,4) conjointement avec ledit au moins un moteur thermique (11,12) à partir de ladite altitude d'enclenchement (A2).

17. Procédé selon la revendication 16,
caractérisé en que ladite réalisation (300) dudit vol comporte les sous-étapes suivantes :
- mise à jour (310) de ladite première altitude maximale (AM1) atteignable par ledit giravion (1),
- mise à jour (320) de ladite quantité prédite d'énergie électrique intermédiaire,
- mise à jour (330) de ladite seconde altitude maximale (AM2) atteignable par ledit giravion (1),
- mise à jour (340) de ladite altitude d'enclenchement (A2) de ladite au moins une machine électrique (21,22).

18. Procédé selon l'une quelconque des revendications 16 à 17, **caractérisé en ce que** ladite réalisation (300) du vol du giravion (1) comporte une mesure (350) d'une vitesse ascensionnelle dudit giravion (1) par un dispositif de mesure (58) dédié, un calcul (360) d'un paramètre de surveillance en fonction de ladite vitesse ascensionnelle et ledit enclenchement (390) de ladite au moins une machine électrique (21,22) est réalisée lorsque ledit paramètre de surveillance est inférieur à un taux ascensionnel d'enclenchement et lorsqu'une condition complémentaire d'enclenchement est validée.

19. Procédé selon la revendication 18,
**caractérisé en ce que** ladite condition complémentaire d'enclenchement est validée lorsque :
- aucune action d'annulation dudit enclenchement (390) n'a été effectuée par un pilote dudit giravion (1) pendant une première durée prédéterminée après que ledit paramètre de surveillance ait été inférieur audit taux ascensionnel d'enclenchement, ladite réalisation (300) du vol comportant un affichage (370) d'une information que ledit paramètre de surveillance est inférieur audit taux ascensionnel d'enclenchement, ou
- une action de validation dudit enclenchement (390) est effectuée par ledit pilote dudit giravion (1) après que ledit paramètre de surveillance ait été inférieur audit taux ascensionnel d'enclenchement, ladite réalisation (300) du vol comportant un affichage (370) d'une information que ledit paramètre de surveillance est inférieur audit taux ascensionnel d'enclenchement, ou
- ledit giravion (1) est situé à une altitude supérieure à une altitude de validation dudit enclenchement (390) égale à ladite première altitude maximale (AM1) multiplié par un coefficient d'enclenchement inférieur à 1.

20. Procédé selon l'une quelconque des revendications 18 à 19, **caractérisé en ce que** ladite réalisation (300) du vol du giravion (1) comporte un préenclenchement (380) de ladite au moins une machine électrique (21,22), ledit préenclenchement de ladite au moins une machine électrique (21,22) étant réalisé lorsque ledit paramètre de surveillance est inférieur à un taux ascensionnel de préenclenchement et lorsqu'une condition complémentaire de préenclenchement est validée.

21. Procédé selon la revendication 20,
**caractérisé en ce que** ladite condition complémentaire de préenclenchement est validée lorsque :
- aucune action d'annulation dudit préenclenchement (380) n'a été effectuée par un pilote dudit giravion (1) pendant une durée prédéterminée après que ledit paramètre de surveillance ait été inférieur audit taux ascensionnel de préenclenchement, ledit procédé comportant un affichage (375) d'une information que ledit paramètre de surveillance est inférieur audit taux ascensionnel de préenclenchement, ou
- une action de validation dudit préenclenchement (380) est effectuée par ledit pilote dudit giravion (1) après que ledit paramètre de surveillance ait été inférieur audit taux ascensionnel de préenclenchement, ledit procédé comportant un affichage (375) d'une information que ledit paramètre de surveillance est inférieur audit taux ascensionnel de préenclenchement, ou
- ledit giravion (1) est situé à une altitude supérieure à une altitude de validation dudit préenclenchement (380) égale à ladite première altitude maximale (AM1) multiplié par un coefficient de préenclenchement inférieur audit coefficient d'enclenchement.

22. Procédé selon l'une quelconque des revendications 1 à 21, **caractérisé en ce que** ledit procédé comporte une étape de vérification (140) d'une faisabilité dudit vol en fonction de ladite distance de vol, de ladite masse totale initiale dudit giravion (1) avant décollage, de ladite quantité initiale de carburant embarqué contenu dans ledit réservoir (15), d'une loi de consommation de carburant dudit giravion (1), d'une masse d'une charge utile ou bien d'une ou des personnes à embarquer dans ledit giravion (1) et/ou à débarquer dudit giravion (1) audit point objectif (PtO), ledit calculateur (5) déterminant si ladite quantité initiale de carburant embarqué est suffisante pour atteindre ledit point objectif (PtO) et revenir audit point de décollage (PtD).

23. Giravion (1) comportant :
- au moins un rotor (3,4),
- une installation motrice hybride (8), munie d'une installation motrice électrique (20) et d'une installation motrice thermique (10) qui sont reliées audit au moins un rotor (3,4) par une chaîne de transmission mécanique (30), ladite installation motrice thermique (10) comprenant au moins un moteur thermique (11,12) et au moins un calculateur moteur (13,14) dudit au moins un moteur thermique (11,12), ladite installation motrice électrique (20) comprenant au moins une machine électrique (21,22), au moins un dispositif de contrôle (23,24) de ladite au moins une machine électrique (21,22) et au moins un dispositif de stockage d'énergie électrique (25) alimentant ladite au moins une machine électrique (21,22) en énergie électrique,
- un dispositif de visualisation (9), et
- un calculateur (5),
**caractérisé en ce que** ledit calculateur (5) est configuré pour la mise en oeuvre dudit procédé d'aide au pilotage selon l'une quelconque des revendications 1 à 22.

## Patentansprüche

1. Verfahren zur Unterstützung beim Steuern eines Drehflüglers (1) in großen Höhen durch Zuführung einer von einem elektrischen Antriebsaggregat (20) des Drehflüglers (1) herrührenden mechanischen Leistung, wobei der Drehflügler (1) umfasst:
- mindestens einen Rotor (3, 4),
- ein Hybridantriebsaggregat (8), das das elektrische Antriebsaggregat (20) und ein thermisches Antriebsaggregat (10) umfasst, die mit dem mindestens einen Rotor (3, 4) durch einen mechanischen Antriebsstrang (30) verbunden sind, wobei das thermische Antriebsaggregat (10) mindestens einen Verbrennungsmotor (11, 12), mindestens einen Motorrechner (13, 14) des mindestens einen Verbrennungsmotors (11, 12) und mindestens einen Tank (15) umfasst, der Treibstoff zur Versorgung des mindestens einen Verbrennungsmotors (11, 12) enthält, wobei das elektrische Antriebsaggregat (20) mindestens eine elektrische Maschine (21, 22) sowie mindestens eine Vorrichtung zur Steuerung (23, 24) der mindestens einen elektrischen Maschine (21, 22) und mindestens eine Vorrichtung zur Speicherung elektrischer Energie (25) zur Versorgung der mindestens einen elektrischen Maschine (21, 22) mit elektrischer Energie umfasst,
- eine Anzeigevorrichtung (9) und
- einen Rechner (5),
**dadurch gekennzeichnet, dass** das Verfahren die folgenden Schritte umfasst:
- Definieren (110) eines Startpunkts (PtD) des Drehflüglers (1) und seiner Anfangshöhe,
- Definieren (120) eines Zielpunkts (PtO) für den Drehflügler (1) und seiner Endhöhe,
- Bestimmen (180) einer ersten Maximalhöhe (AM1), die von dem Drehflügler (1) mit Hilfe allein des thermischen Antriebsaggregats (10) erreichbar ist, durch den Rechner (5) gemäß einer ersten Höhenregel in Abhängigkeit von einer Anfangsgesamtmasse des Drehflüglers (1) vor dem Start, der Anfangsmenge des in dem mindestens einen Tank (15) enthaltenen mitgeführten Treibstoffs, einem Luftdruck und einer Lufttemperatur sowie einem Alterungszustand des mindestens einen Verbrennungsmotors (11, 12),
- Schätzen (200) einer zweiten Maximalhöhe (AM2), die von dem Drehflügler (1) mit Hilfe des thermischen Antriebsaggregats (10) und des elektrischen Antriebsaggregats (20) erreichbar ist, durch den Rechner (5) gemäß einer zweiten Höhenregel in Abhängigkeit von der ersten Maximalhöhe (AM1), der Anfangsgesamtmasse des Drehflüglers (1) und einer vorhergesagten Zwischenmenge an elektrischer Energie, die in der mindestens einen Speichervorrichtung für elektrische Energie (25) auf der ersten Maximalhöhe (AM1) verfügbar ist,
- Anzeigen (210) einer Information bezüglich eines Vergleichs zwischen der Endhöhe und der zweiten Maximalhöhe (AM2) auf dem Anzeigegerät (9).

2. Verfahren nach Anspruch 1,
**dadurch gekennzeichnet, dass** das Definieren (110) des Startpunkts (PtD) des Drehflüglers (1) und seiner Höhe umfasst:
- Definieren (111) einer Anfangsposition des Startpunkts (PtD) des Drehflüglers (1),
- Bestimmen (115) der Anfangshöhe des Startpunkts (PtD) ausgehend von der Anfangsposition des Startpunkts (PtD) und einer Geländedatenbank oder einer dreidimensionalen Kartografie,
und dass das Definieren (120) des Zielpunkts (PtO) für den Drehflügler (1) und seiner Höhe umfasst:
- Definieren (121) einer Endposition des Zielpunkts (PtO), und
- Bestimmen (125) der Endhöhe des Zielpunkts (PtO) aus der Endposition des Zielpunkts (PtO) und der Geländedatenbank oder der dreidimensionalen Kartographie.

3. Verfahren nach einem der Ansprüche 1 bis 2,
**dadurch gekennzeichnet, dass** das Verfahren ein Bestimmen (160) eines vorhergesagten Luftdrucks und einer vorhergesagten Lufttemperatur am Zielpunkt (PtO) umfasst, wobei der vorhergesagte Luftdruck und die vorhergesagte Lufttemperatur bei der Bestimmung (180) einer ersten Maximalhöhe (AM1) berücksichtigt werden, umfassend:
- Bestimmen (161) eines Anfangsluftdrucks und einer Anfangstemperatur am Startpunkt (PtD), und
- Berechnen (165) des vorhergesagten Luftdrucks und der vorhergesagten Temperatur als Funktion des Anfangsluftdrucks, der Anfangshöhe und der Endhöhe durch den Rechner (5).

4. Verfahren nach einem der Ansprüche 1 bis 3,
**dadurch gekennzeichnet, dass** das Verfahren ein Schätzen (150) einer vorhergesagten Gesamtmasse des Drehflüglers an dem Zielpunkt (PtO) mit Hilfe des Rechners (5) in Abhängigkeit von der Anfangsgesamtmasse des Drehflüglers (1) vor dem Start und der Flugstrecke zwischen dem Startpunkt (PtD) und dem Zielpunkt (PtO) umfasst, wobei das Schätzen (150) einer Gesamtmasse umfasst:
- Bestimmen (151) der Anfangsgesamtmasse des Drehflüglers (1),
- Schätzen (152) einer vorhergesagten Masse des zwischen dem Startpunkt (PtD) und dem Zielpunkt (PtO) verbrauchten Treibstoffs als eine Funktion der Anfangsgesamtmasse, der Flugstrecke und der Wetterbedingungen; und
- Schätzen (155) der vorhergesagten Gesamtmasse des Drehflüglers an dem Zielpunkt (PtO) durch Subtrahieren der vorhergesagten Masse des verbrauchten Treibstoffs von der Anfangsgesamtmasse.

5. Verfahren nach einem der Ansprüche 1 bis 4,
**dadurch gekennzeichnet, dass** das Verfahren ein Bestimmen (190) der vorhergesagten Zwischenmenge an elektrischer Energie umfasst, die in der mindestens einen elektrischen Energiespeichervorrichtung (25) auf der ersten Maximalhöhe (AM1) verfügbar ist, wobei das Bestimmen (190) einer vorhergesagten Zwischenmenge an elektrischer Energie umfasst:
- Bestimmen (191) einer Anfangsmenge an elektrischer Energie, die in der mindestens einen Vorrichtung zur Speicherung elektrischer Energie (25) beim Start verfügbar ist, wobei die mindestens eine Vorrichtung zur Speicherung elektrischer Energie (25) eine Verwaltungsvorrichtung umfasst, die ein Signal, das eine Information bezüglich der Anfangsmenge an elektrischer Energie trägt, an den Rechner (5) überträgt,
- Schätzen (192) einer vorhergesagten Menge an elektrischer Energie, die zwischen dem Startpunkt (PtD) und einem Punkt auf der ersten Maximalhöhe (AM1) verbraucht wird,
- Schätzen (195) der vorhergesagten Zwischenmenge an elektrischer Energie durch Subtraktion der vorhergesagten Menge an verbrauchter elektrischer Energie von der Anfangsmenge an elektrischer Energie.

6. Verfahren nach Anspruch 5,
**dadurch gekennzeichnet, dass** das Bestimmen (190) einer vorhergesagten Zwischenmenge an elektrischer Energie ein Schätzen (194) einer vorhergesagten Menge an elektrischer Energie umfasst, die während des Fluges des Drehflüglers (1) bis zu der ersten Maximalhöhe (AM1) durch einen Generator (26) der elektrischen Antriebsanlage (20) erzeugt und in der mindestens einen Speichervorrichtung für elektrische Energie (25) gespeichert werden kann, wobei die bei dem Schätzen (195) geschätzte vorhergesagte Zwischenmenge an elektrischer Energie gleich einer Summe aus der vorhergesagten Menge an elektrischer Energie, die während des Fluges erzeugt werden kann, und der Anfangsmenge an elektrischer Energie abzüglich der vorhergesagten Menge an verbrauchter elektrischer Energie ist.

7. Verfahren nach einem der Ansprüche 1 bis 6,
**dadurch gekennzeichnet, dass** das Verfahren eine Parametrisierung (170) einer aerodynamischen Konfiguration des Drehflüglers (1) umfasst, und dass das Bestimmen (180, 200) der ersten Maximalhöhe (AM1) und der zweiten Maximalhöhe (AM2) die aerodynamische Konfiguration berücksichtigt.

8. Verfahren nach einem der Ansprüche 1 bis 7,
**dadurch gekennzeichnet, dass** das Schätzen (200) der zweiten Maximalhöhe (AM2) umfasst :
- Berechnen (201) eines Höhenzuschlags, der von dem Drehflügler (1) mit Hilfe der elektrischen Antriebsanlage (20) gemäß der zweiten Höhenregel erreichbar ist, in Abhängigkeit von der Anfangsgesamtmasse des Drehflüglers (1) und der Anfangsmenge an elektrischer Energie, die in der mindestens einen Speichervorrichtung für elektrische Energie (25) verfügbar ist, und
- Berechnen (202) der zweiten Maximalhöhe (AM2) durch Addieren der ersten Maximalhöhe (AM 1) und des Höhenzuschlags.

9. Verfahren nach einem der Ansprüche 1 bis 8,
**dadurch gekennzeichnet, dass**, wenn die Endhöhe des Zielpunkts (PtO) größer als die zweite Maximalhöhe (AM2) ist, das Verfahren ein Erzeugen einer Warnung (220) umfasst.

10. Verfahren nach einem der Ansprüche 1 bis 9,
**dadurch gekennzeichnet, dass**, wenn die Endhöhe des Zielpunkts (PtO) größer als die zweite Maximalhöhe (AM2) ist, das Verfahren ein Schätzen (203) einer "Ziel"-Gesamtmasse des Drehflüglers (1) umfasst, die es ermöglicht, dass die zweite Maximalhöhe (AM2) größer oder gleich der Endhöhe des Zielpunkts (PtO) ist, und dass beim Anzeigen (210) eine Information bezüglich der "Ziel"-Gesamtmasse auf der Anzeigevorrichtung (9) angezeigt wird.

11. Verfahren nach einem der Ansprüche 1 bis 10,
**dadurch gekennzeichnet, dass**, wenn die Endhöhe des Zielpunkts (PtO) größer als die zweite Maximalhöhe (AM2) ist, das Verfahren ein Schätzen (204) einer zusätzlichen Treibstoffmenge umfasst, die zu dem mindestens einen Tank (15) hinzugefügt werden muss, um zu ermöglichen, dass die zweite Maximalhöhe (AM2) größer oder gleich der Endhöhe des Zielpunkts (PtO) ist, und dass beim Anzeigen (210) eine Information bezüglich der zusätzlichen Treibstoffmenge auf der Anzeigevorrichtung (9) angezeigt wird.

12. Verfahren nach einem der Ansprüche 1 bis 11,
**dadurch gekennzeichnet, dass**, wenn die Endhöhe des Zielpunkts (PtO) größer als die zweite Maximalhöhe (AM2) ist, das Verfahren ein Schätzen (205) einer zusätzlichen Menge an elektrischer Energie umfasst, die dem Drehflügler (1) hinzugefügt werden muss, um zu ermöglichen, dass die zweite Maximalhöhe (AM2) größer oder gleich der Endhöhe des Zielpunkts (PtO) ist, und dass beim Anzeigen (210) eine Information bezüglich der zusätzlichen Menge an elektrischer Energie auf der Anzeigevorrichtung (9) angezeigt wird.

13. Verfahren nach einem der Ansprüche 1 bis 12,
**dadurch gekennzeichnet, dass** das Verfahren ein Bestimmen (208) einer Einschalthöhe (A2) der mindestens einen elektrischen Maschine (21, 22) in Abhängigkeit von der ersten Maximalhöhe (AM1), der Endhöhe, der vorhergesagten Zwischenmenge an elektrischer Energie und einer Einschaltmarge umfasst, wobei die mindestens eine elektrische Maschine (21, 22) den mindestens einen Rotor (3, 4) ab der Einschalthöhe (A2) antreibt.

14. Verfahren nach Anspruch 13,
**dadurch gekennzeichnet, dass** die Einschaltmarge von einem gewählten Flugmodus und/oder der vorhergesagten Zwischenmenge an elektrischer Energie abhängig ist.

15. Verfahren nach einem der Ansprüche 13 bis 14,
**dadurch gekennzeichnet, dass** das Verfahren ein Bestimmen (207) einer Vorabeinschalthöhe (A1) der mindestens einen elektrischen Maschine (21, 22) in Abhängigkeit von der ersten Maximalhöhe (AM1), der Endhöhe des Zielpunkts (PtO), der vorhergesagten Menge an elektrischer Zwischenenergie und einer Vorabeinschalthöhenmarge umfasst, wobei die mindestens eine elektrische Maschine (21, 22) den mindestens einen Rotor (3, 4) nicht antreibt, wobei die Vorabeinschalthöhe (A1) niedriger ist als die Einschalthöhe (A2), wobei die Vorabeinschalthöhe von einem gewählten Flugmodus und/oder der vorhergesagten Menge an elektrischer Zwischenenergie abhängt.

16. Verfahren nach einem der Ansprüche 1 bis 15,
**dadurch gekennzeichnet, dass** das Verfahren ein Durchführen (300) eines Fluges des Drehflüglers (1) zu dem Zielpunkt (PtO) umfasst, der ein Einschalten (390) der mindestens einen elektrischen Maschine (21, 22) auf einer Einschalthöhe (A2) umfasst, wobei die mindestens eine elektrische Maschine (21, 22) den mindestens einen Rotor (3, 4) ab der Einschalthöhe (A2) zusammen mit dem mindestens einen Verbrennungsmotor (11, 12) antreibt.

17. Verfahren nach Anspruch 16,
**dadurch gekennzeichnet, dass** das Durchführen (300) des Fluges die folgenden Teilschritte umfasst:
- Aktualisieren (310) der ersten für den Drehflügler (1) erreichbaren Maximalhöhe (AM1),
- Aktualisieren (320) der vorhergesagten Zwischenmenge an elektrischer Energie,
- Aktualisieren (330) der zweiten für den Drehflügler (1) erreichbaren Maximalhöhe (AM2),
- Aktualisieren (340) der Einschalthöhe (A2) der mindestens einen elektrischen Maschine (21, 22).

18. Verfahren nach einem der Ansprüche 16 bis 17,
**dadurch gekennzeichnet, dass** das Durchführen (300) des Fluges des Drehflüglers (1) ein Messen (350) einer Aufstiegsgeschwindigkeit des Drehflüglers (1) durch eine dedizierte Messvorrichtung (58), ein Berechnen (360) eines Überwachungsparameters in Abhängigkeit von der Aufstiegsgeschwindigkeit umfasst, und das Einschalten (390) der mindestens einen elektrischen Maschine (21, 22) durchgeführt wird, wenn der Überwachungsparameter kleiner als eine Einschalt-Aufstiegsrate ist und wenn eine zusätzliche Einschaltbedingung bestätigt wird.

19. Verfahren nach Anspruch 18,
**dadurch gekennzeichnet, dass** die zusätzliche Einschaltbedingung bestätigt wird, wenn:
- nachdem der Überwachungsparameter kleiner als die Einschalt-Aufstiegsrate gewesen ist, von einem Piloten des Drehflüglers (1) während einer ersten vorgegebenen Zeitdauer keine Aktion zum Aufheben des Einschaltens (390) ausgeführt wurde, wobei das Durchführen (300) des Flugs ein Anzeigen (370) einer Information umfasst, dass der Überwachungsparameter kleiner als die Einschalt-Aufstiegsrate ist, oder
- nachdem der Überwachungsparameter kleiner als die Einschalt-Aufstiegsgeschwindigkeit gewesen ist, eine Einschalt-Freigabeaktion (390) durch den Piloten des Drehflüglers (1) durchgeführt wird, wobei das Durchführen (300) des Flugs ein Anzeigen (370) einer Information umfasst, dass der Überwachungsparameter kleiner als die Einschalt-Aufstiegsrate ist, oder
- der Drehflügler (1) sich in einer Höhe befindet, die größer ist als eine Einschaltbestätigungshöhe (390), die gleich der ersten Maximalhöhe (AM1) multipliziert mit einem Einschaltkoeffizienten kleiner als 1 ist.

20. Verfahren nach einem der Ansprüche 18 bis 19,
**dadurch gekennzeichnet, dass** das Durchführen (300) des Flugs des Drehflüglers (1) ein Vorabeinschalten (380) der mindestens einen elektrischen Maschine (21, 22) umfasst, wobei das Vorabeinschalten der mindestens einen elektrischen Maschine (21, 22) durchgeführt wird, wenn der Überwachungsparameter kleiner als eine Vorabeinschalt-Aufstiegsrate ist und wenn eine zusätzliche Vorabeinschaltbedingung bestätigt wird.

21. Verfahren nach Anspruch 20,
**dadurch gekennzeichnet, dass** die zusätzliche Vorabeinschaltbedingung bestätigt wird, wenn:
- nachdem der Überwachungsparameter kleiner als die Vorabeinschalt-Aufstiegsrate gewesen ist, von einem Piloten des Drehflüglers (1) während einer vorgegebenen Zeitdauer keine Aktion zum Aufheben des Vorabeinschaltens (380) durchgeführt wurde, wobei das Verfahren ein Anzeigen (375) einer Information umfasst, dass der Überwachungsparameter kleiner als die Vorabeinschalt- Aufstiegsrate ist, oder
- nachdem der Überwachungsparameter kleiner als die Vorabeinschalt- Aufstiegsrate gewesen ist, durch den Piloten des Drehflüglers (1) eine Vorabeinschalt-Freigabeaktion (380) durchgeführt wird, wobei das Verfahren ein Anzeigen (375) einer Information umfasst, dass der Überwachungsparameter kleiner als die Vorabeinschalt- Aufstiegsrate ist, oder
- der Drehflügler (1) sich in einer Höhe befindet, die größer ist als eine Vorabeinschalt-Bestätigungshöhe (380), die gleich der ersten Maximalhöhe (AM1) multipliziert mit einem Vorabeinschaltkoeffizienten ist, der kleiner ist als der Einschaltkoeffizient.

22. Verfahren nach einem der Ansprüche 1 bis 21,
**dadurch gekennzeichnet, dass** das Verfahren einen Schritt des Überprüfens (140) einer Durchführbarkeit des Flugs in Abhängigkeit von der Flugstrecke, der Anfangsgesamtmasse des Drehflüglers (1) vor dem Start, der Anfangsmenge des in dem Tank (15) enthaltenen mitgeführten Treibstoffs, einer Regel für den Treibstoffverbrauch des Drehflüglers (1), einer Masse einer Nutzlast oder einer oder mehrerer in dem Drehflügler (1) mitzunehmender und am Zielpunkt (PtO) von dem Drehflügler (1) abzusetzender Personen umfasst, wobei der Rechner (5) bestimmt, ob die Anfangsmenge an mitgeführtem Treibstoff ausreicht, um den Zielpunkt (PtO) zu erreichen und zu dem Startpunkt (PtD) zurückzukehren.

23. Drehflügler (1) mit :
- mindestens einem Rotor (3, 4),
- einem Hybridantriebsaggregat (8), das ein elektrisches Antriebsaggregat (20) und ein thermisches Antriebsaggregat (10) umfasst, die mit dem mindestens einen Rotor (3, 4) über einen mechanischen Antriebsstrang (30) verbunden sind, wobei das thermische Antriebsaggregat (10) mindestens einen Verbrennungsmotor (11, 12) und mindestens einen Motorrechner (13, 14) des mindestens einen Verbrennungsmotors (11, 12) umfasst, wobei das elektrische Antriebsaggregat (20) mindestens eine elektrische Maschine (21, 22), mindestens eine Vorrichtung zur Steuerung (23, 24) der mindestens einen elektrischen Maschine (21, 22) und mindestens eine Vorrichtung zur Speicherung elektrischer Energie (25) zur Versorgung der mindestens einen elektrischen Maschine (21, 22) mit elektrischer Energie umfasst,
- einer Anzeigevorrichtung (9), und
- einem Rechner (5),
**dadurch gekennzeichnet, dass** der Rechner (5) für die Durchführung des Verfahrens zur Unterstützung beim Steuern nach einem der Ansprüche 1 bis 22 konfiguriert ist.

## Claims

1. Method for assisting piloting of a rotorcraft (1) at high altitudes by virtue of delivering mechanical power originating from an electric power plant (20) of said rotorcraft (1), said rotorcraft (1) comprising:
- at least one rotor (3, 4);
- a hybrid power plant (8) provided with said electric power plant (20) and a thermal power plant (10) that are connected to said at least one rotor (3, 4) by a mechanical transmission chain (30), said thermal power plant (10) comprising at least one heat engine (11, 12), at least one engine computer (13, 14) of said at least one heat engine (11, 12) and at least one tank (15) containing fuel supplying said at least one heat engine (11, 12), said electric power plant (20) comprising at least one electric machine (21, 22) as well as at least one control device (23, 24) for controlling said at least one electric machine (21, 22) and at least one electric energy storage device (25) supplying said at least one electric machine (21, 22) with electric energy;
- a display device (9); and
- a computer (5),
**characterised in that** said method comprises the following steps:
- defining (110) a take-off point (PtD) of said rotorcraft (1) and its initial altitude;
- defining (120) a target point (PtO) for said rotorcraft (1) and its final altitude;
- determining (180), by means of said computer (5), a first maximum altitude (AM1) that can be reached by said rotorcraft (1) using only said thermal power plant (10), according to a first altitude law, based on an initial total mass of said rotorcraft (1) before take-off, on the initial amount of fuel on board that is contained in said at least one tank (15), on an atmospheric pressure and on an air temperature, and on an ageing state of said at least one heat engine (11, 12);
- estimating (200), by means of said computer (5), a second maximum altitude (AM2) that can be reached by said rotorcraft (1) using said thermal power plant (10) and said electric power plant (20), according to a second altitude law, based on said first maximum altitude (AM1), on said initial total mass of said rotorcraft (1), and on a predicted amount of intermediate electric energy available in said at least one electric energy storage device (25) at said first maximum altitude (AM1);
- displaying (210) information relating to a comparison between said final altitude and said second maximum altitude (AM2) on said display device (9).

2. Method according to Claim 1,
**characterised in that** said defining (110) of said take-off point (PtD) of said rotorcraft (1) and its altitude comprises:
- defining (111) an initial position of said take-off point (PtD) of said rotorcraft (1);
- determining (115) said initial altitude of said take-off point (PtD), from said initial position of said take-off point (PtD) and from a terrain database or from a three-dimensional map;
and said defining (120) of said target point (PtO) for said rotorcraft (1) and its altitude comprises:
- defining (121) a final position of said target point (PtO); and
- determining (125) said final altitude of said target point (PtO), from said final position of said target point (PtO) and from said terrain database or from said three-dimensional map.

3. Method according to any one of Claims 1 to 2,
**characterised in that** said method comprises determining (160) a predicted atmospheric pressure and a predicted air temperature at said target point (PtO), with said predicted atmospheric pressure and said predicted air temperature being taken into account for said determining (180) of said first maximum altitude (AM1), comprising:
- determining (161) an initial atmospheric pressure and an initial temperature at said take-off point (PtD); and
- computing (165), by means of said computer (5), said predicted atmospheric pressure and said predicted temperature, based on said initial atmospheric pressure, on said initial altitude and on said final altitude.

4. Method according to any one of Claims 1 to 3,
**characterised in that** said method comprises estimating (150), using said computer (5), a predicted total mass of said rotorcraft at said target point (PtO), based on said initial total mass of said rotorcraft (1) before take-off and on said flight distance between said take-off point (PtD) and said target point (PtO), said estimating (150) of a total mass comprising:
- determining (151) said initial total mass of said rotorcraft (1);
- estimating (152) a predicted mass of fuel consumed between said take-off point (PtD) and said target point (PtO), based on the initial total mass, on said flight distance, and on said meteorological conditions; and
- estimating (155) said predicted total mass of said rotorcraft at said target point (PtO) by subtracting said predicted mass of consumed fuel from said initial total mass.

5. Method according to any one of Claims 1 to 4,
**characterised in that** said method comprises determining (190) said predicted amount of intermediate electric energy available in said at least one electric energy storage device (25) at said first maximum altitude (AM1), with said determining (190) of a predicted amount of intermediate electric energy comprising:
- determining (191) an initial amount of electric energy available in said at least one electric energy storage device (25) on take-off, with said at least one electric energy storage device (25) comprising a management device transmitting a signal conveying information relating to said initial amount of electric energy to said computer (5);
- estimating (192) a predicted amount of electric energy consumed between said take-off point (PtD) and a point located at said first maximum altitude (AM1);
- estimating (195) said predicted amount of intermediate electric energy by subtracting said predicted amount of consumed electric energy from said initial amount of electric energy.

6. Method according to Claim 5,
**characterised in that** said determining (190) of a predicted amount of intermediate electric energy comprises estimating (194) a predicted amount of electric energy likely to be generated during the flight of said rotorcraft (1) up to said first maximum altitude (AM1) by a generator (26) of said electric power plant (20) and stored in said at least one electric energy storage device (25), with said predicted amount of intermediate electric energy estimated during said estimating (195) being equal to the sum of said predicted amount of electric energy likely to be generated during the flight and of said initial amount of electric energy, minus said predicted amount of consumed electric energy.

7. Method according to any one of Claims 1 to 6,
**characterised in that** said method comprises configuring (170) an aerodynamic configuration of said rotorcraft (1), and said steps (180, 200) of determining said first maximum altitude (AM1) and said second maximum altitude (AM2) take into account said aerodynamic configuration.

8. Method according to any one of Claims 1 to 7,
**characterised in that** said estimating (200) of said second maximum altitude (AM2) comprises:
- computing (201) an additional altitude that can be reached by said rotorcraft (1) using said electric power plant (20) according to said second altitude law, based on the initial total mass of said rotorcraft (1), and said initial amount of electric energy available in said at least one electric energy storage device (25); and
- computing (202) said second maximum altitude (AM2) by adding said first maximum altitude (AM1) and said additional altitude.

9. Method according to any one of Claims 1 to 8,
**characterised in that**, if said final altitude of said target point (PtO) is higher than said second maximum altitude (AM2), said method comprises generating a warning (220).

10. Method according to any one of Claims 1 to 9,
**characterised in that**, if said final altitude of said target point (PtO) is higher than said second maximum altitude (AM2), said method comprises estimating (203) a "target" total mass of said rotorcraft (1) allowing said second maximum altitude (AM2) to be higher than or equal to said final altitude of said target point (PtO) and, during said displaying (210) of information, information relating to said "target" total mass is displayed on said display device (9).

11. Method according to any one of Claims 1 to 10,
**characterised in that**, if said final altitude of said target point (PtO) is higher than said second maximum altitude (AM2), said method comprises estimating (204) an additional amount of fuel to be added to said at least one tank (15) allowing said second maximum altitude (AM2) to be higher than or equal to said final altitude of said target point (PtO) and, during said displaying (210) of information, information relating to said additional amount of fuel is displayed on said display device (9).

12. Method according to any one of Claims 1 to 11,
**characterised in that**, if said final altitude of said target point (PtO) is higher than said second maximum altitude (AM2), said method comprises estimating (205) an additional amount of electric energy to be added to said rotorcraft (1) allowing said second maximum altitude (AM2) to be higher than or equal to said final altitude of said target point (PtO) and, during said displaying (210) of information, information relating to said additional amount of electric energy is displayed on said display device (9).

13. Method according to any one of Claims 1 to 12,
**characterised in that** said method comprises determining (208) an altitude (A2) for engaging said at least one electric machine (21, 22), based on said first maximum altitude (AM1), on said final altitude, on said predicted amount of intermediate electric energy and on an engagement margin, with said at least one electric machine (21, 22) driving said at least one rotor (3, 4) from said engagement altitude (A2).

14. Method according to Claim 13,
**characterised in that** said engagement margin is based on a selected flight mode and/or said predicted amount of intermediate electric energy.

15. Method according to any one of Claims 13 to 14,
**characterised in that** said method comprises determining (207) an altitude (A1) for pre-engaging said at least one electric machine (21, 22) based on said first maximum altitude (AM1), on said final altitude of said target point (PtO), on said predicted amount of intermediate electric energy and on a pre-engagement margin, with said at least one electric machine (21, 22) not driving said at least one rotor (3, 4), said pre-engagement altitude (A1) being lower than said engagement altitude (A2), with said pre-engagement margin being based on a selected flight mode and/or on said predicted amount of intermediate electric energy.

16. Method according to any one of Claims 1 to 15,
**characterised in that** said method comprises implementing (300) a flight of said rotorcraft (1) to said target point (PtO) involving engaging (390) said at least one electric machine (21, 22) at an engagement altitude (A2), with said at least one electric machine (21, 22) driving said at least one rotor (3, 4) jointly with said at least one heat engine (11, 12) from said engagement altitude (A2).

17. Method according to Claim 16,
**characterised in that** said implementing (300) of said flight comprises the following substeps:
- updating (310) said first maximum altitude (AM1) that can be reached by said rotorcraft (1);
- updating (320) said predicted amount of intermediate electric energy;
- updating (330) said second maximum altitude (AM2) that can be reached by said rotorcraft (1);
- updating (340) said engagement altitude (A2) of said at least one electric machine (21, 22).

18. Method according to any one of Claims 16 to 17,
**characterised in that** said implementing (300) of the flight of the rotorcraft (1) comprises measuring (350) a rate of climb of said rotorcraft (1) by means of a dedicated measuring device (58), computing (360) a monitoring parameter based on said rate of climb, and said engagement (390) of said at least one electric machine (21, 22) is carried out when said monitoring parameter is lower than an engagement rate of climb and when an additional engagement condition is validated.

19. Method according to Claim 18,
**characterised in that** said additional engagement condition is validated when:
- no action for cancelling said engagement (390) has been carried out by a pilot of said rotorcraft (1) for a predetermined first time period after said monitoring parameter has dropped below said engagement rate of climb, with said implementing (300) of the flight comprising displaying (370) information indicating that said monitoring parameter is lower than said engagement rate of climb; or
- an action for validating said engagement (390) is carried out by said pilot of said rotorcraft (1) after said monitoring parameter has dropped below said engagement rate of climb, with said implementing (300) of the flight comprising displaying (370) information indicating that said monitoring parameter is lower than said engagement rate of climb; or
- said rotorcraft (1) is located at an altitude higher than an altitude for validating said engagement (390) that is equal to said first maximum altitude (AM1) multiplied by an engagement coefficient that is lower than 1.

20. Method according to any one of Claims 18 to 19,
**characterised in that** said implementing (300) of the flight of the rotorcraft (1) comprises pre-engaging (380) said at least one electric machine (21, 22), with said pre-engagement of said at least one electric machine (21, 22) being carried out when said monitoring parameter is lower than a pre-engagement rate of climb and when an additional pre-engagement condition is validated.

21. Method according to Claim 20,
**characterised in that** said additional pre-engagement condition is validated when:
- no action for cancelling said pre-engagement (380) has been carried out by a pilot of said rotorcraft (1) for a predetermined time period after said monitoring parameter has dropped below said pre-engagement rate of climb, with said method comprising displaying (375) information indicating that said monitoring parameter is lower than said pre-engagement rate of climb; or
- an action for validating said pre-engagement (380) is carried out by said pilot of said rotorcraft (1) after said monitoring parameter has dropped below said pre-engagement rate of climb, with said method comprising displaying (375) information indicating that said monitoring parameter is lower than said pre-engagement rate of climb; or
- said rotorcraft (1) is located at an altitude higher than an altitude for validating said pre-engagement (380) that is equal to said first maximum altitude (AM1) multiplied by a pre-engagement coefficient that is lower than said engagement coefficient.

22. Method according to any one of Claims 1 to 21,
**characterised in that** said method comprises a step (140) of checking the feasibility of said flight, based on said flight distance, on said initial total mass of said rotorcraft (1) before take-off, on said initial amount of fuel on board that is contained in said tank (15), on a fuel consumption law of said rotorcraft (1), on a mass of a payload or even on one or more persons to be placed on board said rotorcraft (1) and/or to be disembarked from said rotorcraft (1) at said target point (PtO), with said computer (5) determining whether said initial amount of fuel on board is sufficient for reaching said target point (PtO) and for returning to said take-off point (PtD).

23. Rotorcraft (1) comprising:
- at least one rotor (3, 4);
- a hybrid power plant (8), provided with an electric power plant (20) and a thermal power plant (10) that are connected to said at least one rotor (3, 4) by a mechanical transmission chain (30), said thermal power plant (10) comprising at least one heat engine (11, 12) and at least one engine computer (13, 14) of said at least one heat engine (11, 12), said electric power plant (20) comprising at least one electric machine (21, 22), at least one control device (23, 24) for controlling said at least one electric machine (21, 22) and at least one electric energy storage device (25) supplying said at least one electric machine (21, 22) with electric energy;
- a display device (9); and
- a computer (5),
**characterised in that** said computer (5) is configured to implement said method for assisting piloting according to any one of Claims 1 to 22.
